(19) Europäisches Patentamt
European Patent Office
Office européen des brevets

(11) **EP 4 129 041 B1**

(12) **EUROPEAN PATENT SPECIFICATION**

(45) Date of publication and mention
of the grant of the patent:
**21.08.2024 Bulletin 2024/34**

(21) Application number: **22793367.8**

(22) Date of filing: **25.03.2022**

(51) International Patent Classification (IPC):
**A01D 34/68** *(2006.01)*     **A01D 34/82** *(2006.01)*

(52) Cooperative Patent Classification (CPC):
**A01D 34/68; A01D 34/824;** A01D 2034/6843

(86) International application number:
**PCT/CN2022/083092**

(87) International publication number:
**WO 2022/227970 (03.11.2022 Gazette 2022/44)**

(54) **WALK-BEHIND SELF-PROPELLED WORK MACHINE**

HANDGEFÜHRTE SELBSTFAHRENDE ARBEITSMASCHINE

MACHINE DE TRAVAIL POUSSÉE AUTOPROPULSÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.04.2021   CN 202110457354
27.04.2021   CN 202120893833 U
27.04.2021   CN 202120891569 U
27.04.2021   CN 202120894570 U
27.04.2021   CN 202110462557**

(43) Date of publication of application:
**08.02.2023 Bulletin 2023/06**

(73) Proprietor: **Nanjing Chervon Industry Co., Ltd.
Nanjing, Jiangsu 211106 (CN)**

(72) Inventors:
• **ZHU, Ronggen**
**Nanjing, Jiangsu 211106 (CN)**
• **REN, Yufei**
**Nanjing, Jiangsu 211106 (CN)**
• **YANG, Dezhong**
**Nanjing, Jiangsu 211106 (CN)**

(74) Representative: **Sun, Yiming
HUASUN Patent- und Rechtsanwälte
Friedrichstraße 33
80801 München (DE)**

(56) References cited:
WO-A1-2017/158095     WO-A1-2021/013251
CN-A- 102 232 333     CN-A- 106 385 982
CN-A- 108 790 946     CN-U- 207 022 561
CN-U- 208 572 762     CN-U- 215 601 945
CN-U- 215 601 946     CN-U- 215 601 947
US-A- 5 575 140     US-A1- 2012 097 469
US-A1- 2018 368 316     US-A1- 2019 307 066

## Description

## TECHNICAL FIELD

The present application relates to garden tools and, in particular, to a rear-moving self-propelled working machine.

## BACKGROUND

A lawn mower is a rear-moving self-propelled working machine, and a user may stand behind the lawn mower to push the lawn mower to walk, so as to mow home lawns. When the user pushes the lawn mower on the grass for a long time to mow a lawn, a lot of physical efforts are consumed. To reduce a labor intensity of an operator mowing the grass, a self-moving lawn mower appears on the market.

Document WO 2021/013251 A1 discloses a rear-moving self-propelled working machine according to the preamble of claim 1.

## SUMMARY

To solve the defects in the related art, an object of the present application is to provide a rear-moving self-propelled working machine with higher reliability and higher detection accuracy.

To achieve the preceding object, the present application adopts the technical solutions as defined by the appended claims.

An examplary rear-moving self-propelled working machine includes a main machine and a handle device. The main machine includes a moving assembly and a motor for driving the moving assembly. The handle device is connected to the main machine. The handle device includes an operation member, a connecting rod assembly, a housing, a sensing device, and a trigger assembly. The operation member includes a grip for a user to hold. The connecting rod assembly includes a first connecting rod connected to the main machine. The housing is formed with a first accommodation cavity, where the first connecting rod extends into the first accommodation cavity. The sensing device is used for sensing a thrust applied to the handle device to drive the rear-moving self-propelled working machine. The trigger assembly is capable of applying a force to the sensing device when the grip receives the thrust so as to drive the sensing device to deform. The trigger assembly is connected to the connecting rod assembly, and the sensing device is connected to the operation member.

In an example, the sensing device includes a pressure sensor, and when the grip receives the thrust, the trigger assembly applies the force to the pressure sensor to drive the pressure sensor to deform.

In an example, the operation member is formed with a second accommodation cavity, where the pressure sensor is at least partially disposed in the second accommodation cavity.

In an example, the operation member is disposed outside the housing.

In an example, the pressure sensor is disposed outside the housing.

In an example, the trigger assembly includes a trigger piece and a slider. The trigger piece is used for applying the force to the pressure sensor. The slider is connected to the first connecting rod. The handle device further includes a support piece for supporting the slider, the slider is in contact with the trigger piece, the support piece is fixedly connected to the operation member, and the slider penetrates through the support piece.

In an example, when the operation member receives the thrust, a relative motion between the support piece and the slider is capable of being generated to deform the pressure sensor, where a maximum value of the relative motion between the support piece and the slider is less than or equal to 3 mm.

In an example, the support piece is disposed in the housing.

In an example, the trigger piece includes a sphere portion in contact with the pressure sensor.

In an example, the trigger piece is a sphere.

In an example, the sensing device includes a pressure sensor and the handle device further includes a preload element for biasing the trigger assembly to apply a preload force to the pressure sensor.

In an example, the connecting rod assembly further includes a second connecting rod connected to the main machine, and the housing is connected to the first connecting rod and the second connecting rod.

The beneficial effects of the present application are as follows: the rear-moving self-propelled working machine has a simple structure and higher reliability; the pressure sensor of the rear-moving self-propelled working machine has higher detection accuracy and higher reliability; the adaptive adjustment of a force is performed more smoothly so that the user can follow in a more comfortable state; and the interference to a signal due to long-distance transmission is avoided, thereby ensuring the accuracy of a control response.

## BRIEF DESCRIPTION OF DRAWINGS

FIG. 1 is a perspective view of a rear-moving self-propelled working machine;

FIG. 2 is a perspective view of part of a handle device of the rear-moving self-propelled working machine in FIG. 1;

FIG. 3 is a plan view of the structure shown in FIG. 2;

FIG. 4 is a sectional view of the structure shown in FIG. 2;

FIG. 5 is an enlarged view of a partial region in FIG. 4;

FIG. 6 is an enlarged view of a support piece, a slider, and a preload element in FIG. 5;

FIG. 7 is a plan view of part of the handle device in FIG. 3 with an operation member separated;

FIG. 8 is an enlarged view of a partial region in FIG. 7;

FIG. 9 is a plan view of the structure shown in FIG. 7 with part of a housing removed;

FIG. 10 is an enlarged view of a partial region in FIG. 9;

FIG. 11 is an exploded view of part of the handle device in FIG. 2;

FIG. 12 is a sectional view of a pressure sensor and a trigger piece in FIG. 4 when the pressure sensor is basically not deformed;

FIG. 13 is a sectional view of a pressure sensor and a trigger piece in FIG. 4 when the pressure sensor is deformed;

FIG. 14A is a plan view of a trigger piece according to another example;

FIG. 14B is a plan view of a pressure sensor and a trigger piece according to another example;

FIG. 14C is a plan view of a pressure sensor and a trigger piece according to another example;

FIG. 15 is a perspective view of a handle device of a lawn mower according to another example;

FIG. 16 is a plan view of the handle device in FIG. 15;

FIG. 17 is a sectional view of the handle device in FIG. 15;

FIG. 18 is a perspective view of the handle device in FIG. 15 with a first housing portion removed;

FIG. 19 is an enlarged view of a partial region in FIG. 17;

FIG. 20 is an enlarged view of a partial region in FIG. 18;

FIG. 21 is a graph illustrating a variation curve of a motor speed when the speed is controlled according to a thrust in the related art;

FIG. 22 is a perspective view of a rear-moving self-propelled working machine;

FIG. 23 is a sectional view of part of a structure of a handle device of the rear-moving self-propelled working machine in FIG. 22;

FIG. 24A is a graph illustrating a relationship between an electrical signal of a pressure sensor of the rear-moving self-propelled working machine in FIG. 22 and a thrust;

FIG. 24B is a graph illustrating a relationship between an electrical signal of a pressure sensor of the rear-moving self-propelled working machine in FIG. 22 and a thrust;

FIG. 25 is a logic control diagram of the rear-moving self-propelled working machine in FIG. 22;

FIG. 26 is another logic control diagram of the rear-moving self-propelled working machine in FIG. 22;

FIG. 27 is a field-oriented control (FOC) diagram of whole machine control of the rear-moving self-propelled working machine in FIG. 22; and

FIG. 28 is a flowchart of a method for whole machine control of the rear-moving self-propelled working machine in FIG. 22.

## DETAILED DESCRIPTION

The present application is described below in detail in conjunction with drawings and examples.

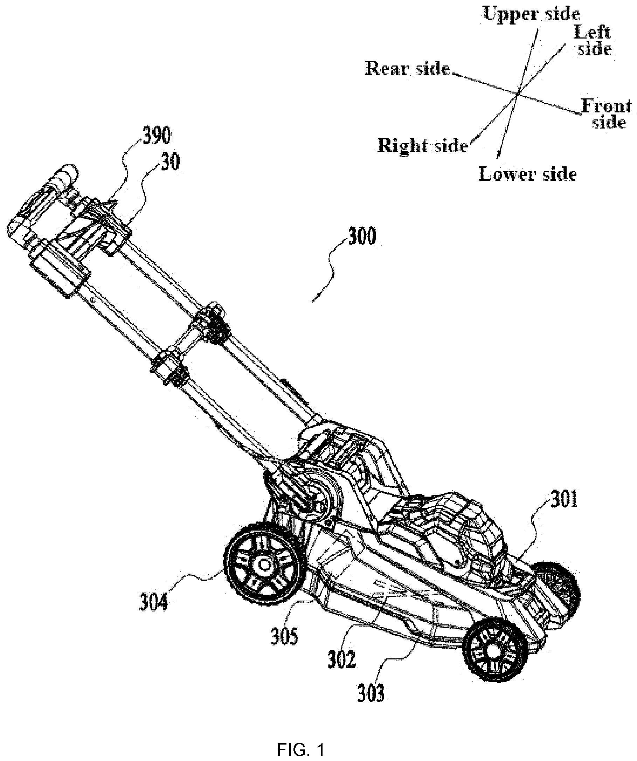

In some related lawn mowers with a self-moving function, the self-moving function requires manual control, only a constant speed can be outputted, and a user can only follow a lawn mower and perform a mowing operation. If a moving speed of the user is less than a moving speed of the lawn mower, the user may feel pulled by the lawn mower. If the moving speed of the user is greater than the moving speed of the lawn mower, the user may feel hindered by the lawn mower. To sum up, the comfort of the user during mowing is reduced. To solve the preceding problems, this example provides a rear-moving self-propelled working machine as shown in FIG. 1 and specifically, a lawn mower 300 for mowing lawns. In other examples, the rear-moving self-propelled working machine may be another self-propelled working machine such as a snow thrower or a trolley.

As shown in FIG. 1, the lawn mower 300 includes a main machine 301 and a handle device 30. The main machine 301 includes a blade assembly 302, a chassis 303, a moving assembly 304, and a motor 305. The blade assembly 302 is used for implementing a cutting function. The chassis 303 is used for accommodating the blade assembly 302. The moving assembly 304 supports the chassis 303. The motor 305 is used for driving the blade assembly 302 to rotate and can also drive the moving assembly 304 to rotate.

The handle device 30 is connected to the main machine 301, and the handle device 30 is connected to a rear end of the main machine 301. The handle device 30 is used for the user to operate. The handle device 30 can also rotate relative to the main machine 301 so as to adapt to users with different heights. The handle device 30 can also rotate relative to the main machine 301 to a folded state. In this case, the lawn mower 300 occupies a relatively small space, thereby facilitating the storage of the lawn mower 300.

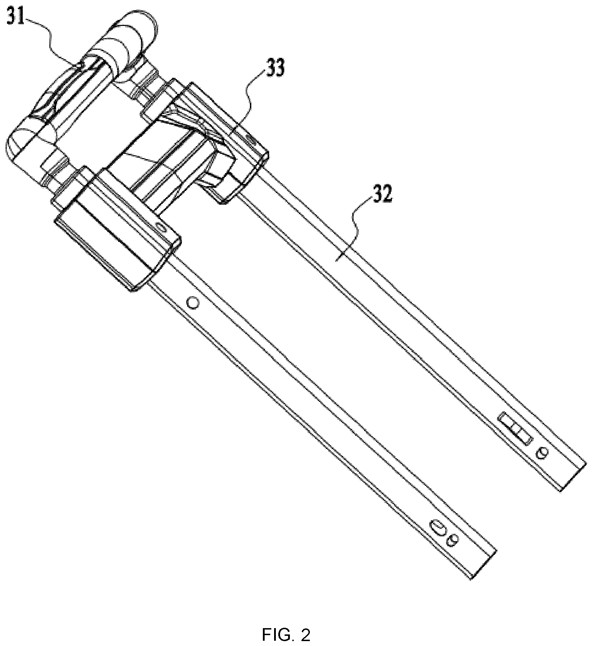

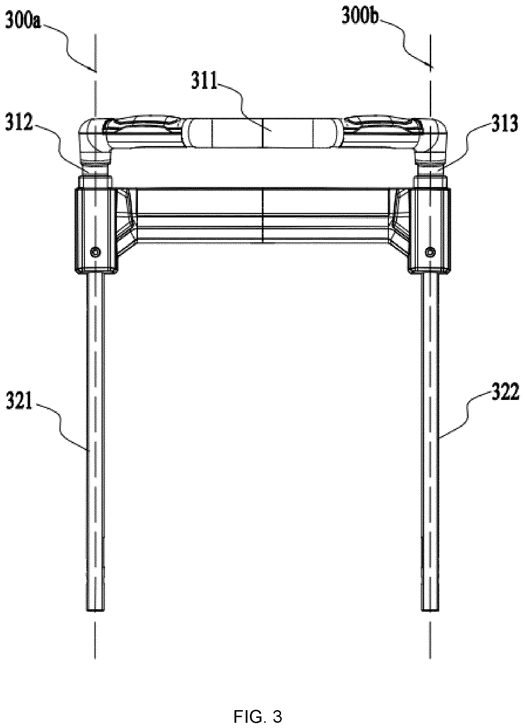

As shown in FIGS. 1 to 6, the handle device 30 includes an operation member 31, a connecting rod assembly 32, a housing 33, a sensing device 34a, a trigger assembly 35, and a preload element 36, where the sensing device 34a includes a pressure sensor 34. The operation member 31 includes a grip 311, a first mounting portion 312, and a second mounting portion 313, where the grip 311 is used for the user to hold, and the first mounting portion 312 and the second mounting portion 313 are disposed at two ends of the grip 311, separately. In this example, the first mounting portion 312 extends along a first straight line 300a, and the second mounting portion 313 extends along a second straight line 300b parallel to the first straight line 300a. When the user needs to push the lawn mower 300 for mowing, the user may stand on a rear side of the handle device 30 and hold the grip 311 by hand to apply a forward thrust to the grip 311 so that the lawn mower 300 can be driven to move on the ground.

The connecting rod assembly 32 is used for connecting the operation member 31 to the main machine 301. The connecting rod assembly 32 includes a first connecting rod 321 and a second connecting rod 322. An end of the first connecting rod 321 is connected to the main machine 301, and the other end of the first connecting rod 321 is connected to the first mounting portion 312. An end of the second connecting rod 322 is connected to the main machine 301, and the other end of the second connecting rod 322 is connected to the second mounting portion 313. The first connecting rod 321 extends along the first straight line 300a, and the second connecting rod 322 extends along the second straight line 300b parallel to the first straight line 300a.

The housing 33 extends along a left and right direction, and the housing 33 is connected to the first connecting rod 321 and the second connecting rod 322. The handle device 30 further includes a trigger 390 for starting the blade assembly 302, where the trigger 390 is rotatably connected to the housing 33. The housing 33 is formed with a first accommodation cavity 331, where the first connecting rod 321 extends into the first accommodation cavity 331 along the first straight line 300a. The housing 33 is also fixedly connected to the connecting rod assembly 32.

The pressure sensor 34 is used for sensing a thrust applied to the handle device 30 to drive the lawn mower 300 to move forward. In this example, the pressure sensor 34 is a resistance strain gauge sensor. In other examples, the pressure sensor may be a thin-film piezoelectric sensor or the pressure sensor may be a ceramic sensor. The trigger assembly 35 can apply a force to the pressure sensor 34 when the grip 311 receives the thrust, and the trigger assembly 35 can drive the pressure sensor 34 to deform. In this manner, when the user applies the thrust to the grip 311, the trigger assembly 35 applies the force to the pressure sensor 34, and the pressure sensor 34 is deformed and generates an electrical signal. The lawn mower 300 may further include a signal processing device and a controller. The electrical signal generated by the pressure sensor 34 is sent to the signal processing device, the signal processing device sends the processed signal to the controller, and the controller controls the lawn mower 300 to move on the ground. Moreover, the lawn mower 300 accelerates when the thrust applied by the user increases, and the lawn mower 300 decelerates when the thrust applied by the user decreases. When the user accelerates, the thrust applied by the user to the handle device 30 increases, and the controller controls a forward speed of the lawn mower 300 to increase. Similarly, when the user decelerates, the thrust applied by the user to the handle device 30 decreases, and the controller controls the forward speed of the lawn mower 300 to decrease. Therefore, the forward speed of the lawn mower 300 adapts to the moving speed of the user, and the phenomenon that the lawn mower 300 pulls the user to run does not occur, thereby improving the user's comfort.

In this example, a ratio of a component of the thrust received by the grip 311 along a direction of the first straight line 300a to a deformation amount of the pressure sensor 34 along the direction of the first straight line 300a is greater than or equal to 40 N/mm and less than or equal to 1200 N/mm. Alternatively, in other examples, the ratio of the component of the thrust received by the grip 311 along the direction of the first straight line 300a to the deformation amount of the pressure sensor 34 along the direction of the first straight line 300a is greater than or equal to 1200 N/mm and less than or equal to 5000 N/mm.

In this example, the pressure sensor 34 is connected to the operation member 31, and the trigger assembly 35 is connected to the connecting rod assembly 32. In this manner, the pressure sensor 34 and the operation member 31 constitute a first whole that moves together, and the trigger assembly 35 and the connecting rod assembly 32 constitute a second whole that moves together. In this manner, a position of the trigger assembly 35 with the connecting rod assembly 32 along the direction of the first straight line 300a remains unchanged, while the pressure sensor 34 moves with the operation member 31, thereby reducing the number of moving parts, facilitating the installation of the pressure sensor 34 and the trigger assembly 35, and simplifying the structure of the lawn mower 300. At the same time, the operation member 31 is likely to deform or shake in a working process, for example, positions of the first mounting portion 312 and the second mounting portion 313 change. At this time, the position of the trigger assembly 35 relative to the connecting rod assembly 32 along the direction of the first straight line 300a remains fixed so that the connecting rod assembly 32 can apply the force to the pressure sensor 34 relatively stably, thereby improving the detection accuracy of the pressure sensor 34 and making the lawn mower 300 still reliable after long-term use.

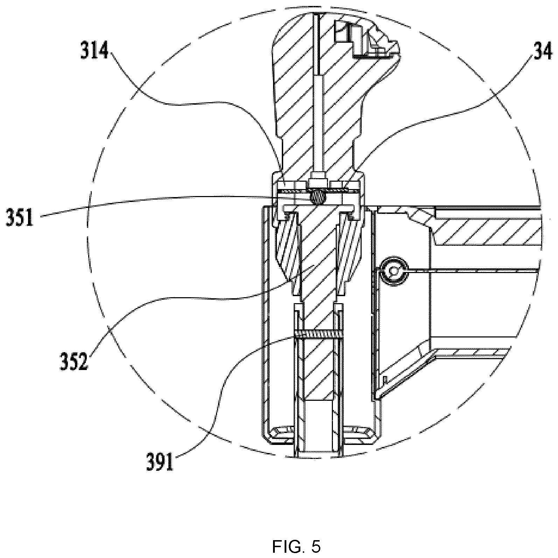

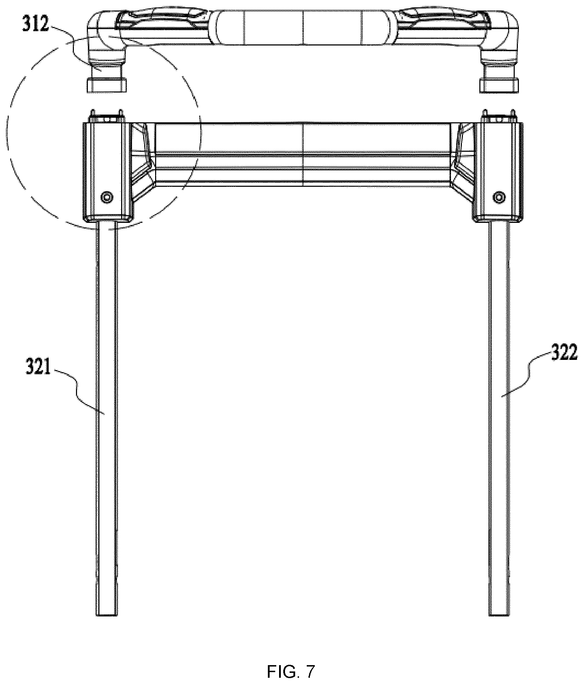

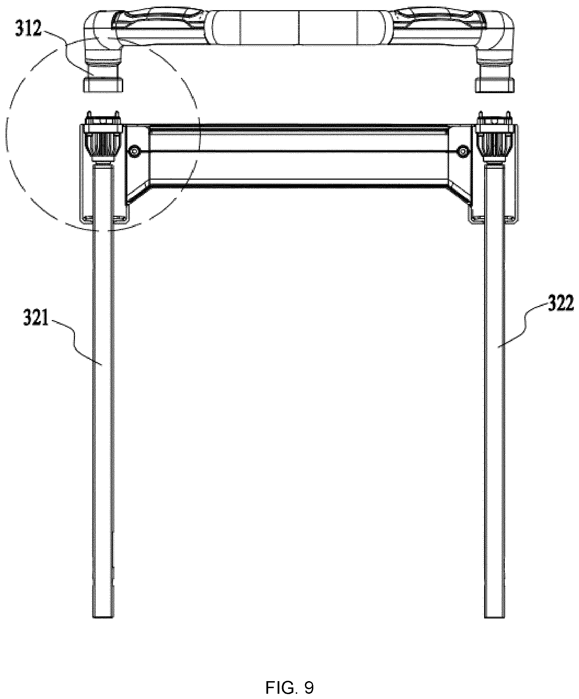

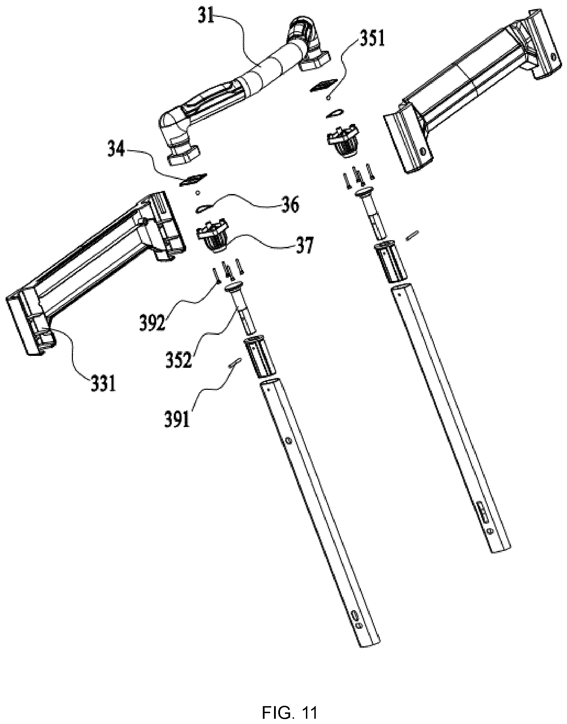

Specifically, as shown in FIGS. 5 to 11, in this example, the trigger assembly 35 includes a trigger piece 351 and a slider 352, where the trigger piece 351 is used for being in contact with the pressure sensor 34 to apply the force to the pressure sensor 34. The slider 352 is used for connecting the trigger piece 351 to the first connecting rod 321. In this example, the slider 352 and the trigger piece 351 are two different parts. In other examples, the slider 352 may be integrally formed with the trigger piece 351. In this example, the slider 352 is connected to the connecting rod assembly 32 through a connecting pin 391, where the connecting pin 391 extends along a direction perpendicular to the first straight line 300a.

The operation member 31 is formed with a second accommodation cavity 314, where the second accommodation cavity 314 is formed at an end of the first mounting portion 312 farther away from the grip 311. The second accommodation cavity 314 is open toward the connecting rod assembly 32, and the pressure sensor 34 is disposed in the second accommodation cavity 314. In this example, the pressure sensor 34 is mounted to the first mounting portion 312, and the pressure sensor 34 is fixedly connected to the first mounting portion 312 through screws 392. The trigger assembly 35 is mounted to the connecting rod assembly 32. Specifically, the slider 352 in the trigger assembly 35 is fixedly connected to the first connecting rod 321, and positions of the slider 352 and the trigger piece 351 along the direction of the first straight line 300a are synchronized. The pressure sensor 34 is disposed outside the housing 33, thereby facilitating the assembly of the pressure sensor 34. When the pressure sensor 34 is severely deformed after long-term use, or when the pressure sensor 34 fails in detection, the user can replace the pressure sensor 34 more conveniently. In other examples, the pressure sensor may be mounted to the connecting rod assembly, and the trigger assembly may be mounted to the first mounting portion.

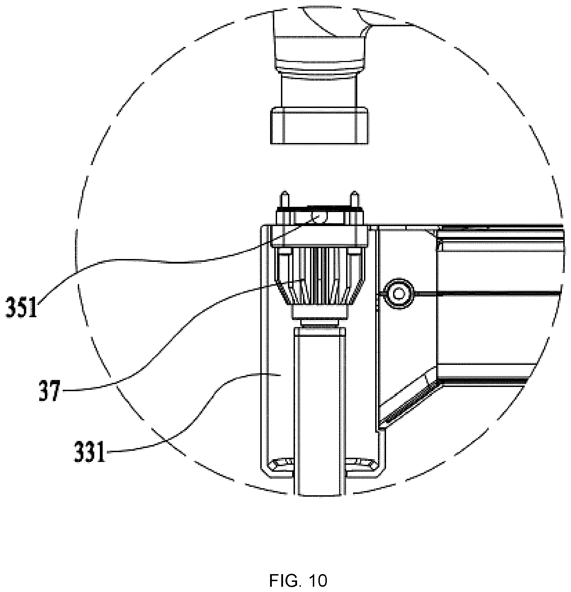

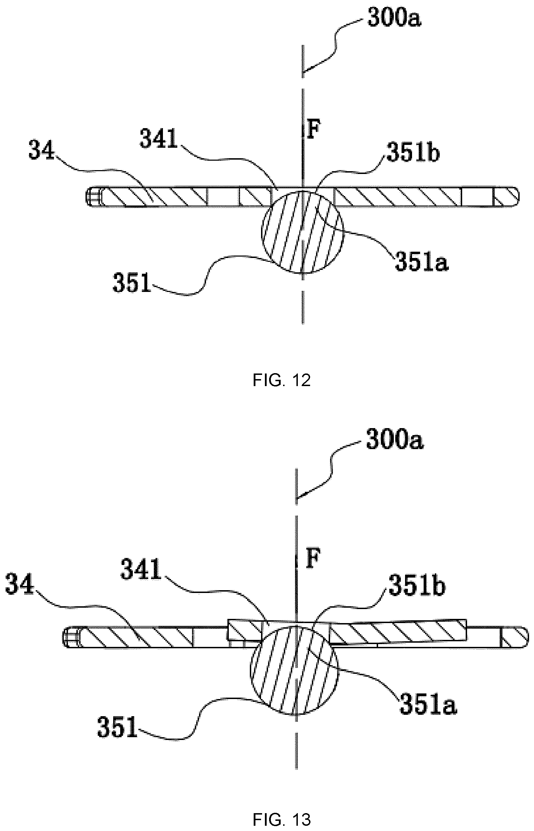

As shown in FIGS. 5, 8 and 10, the trigger piece 351 is at least partially disposed in the second accommodation cavity 314. As shown in FIGS. 10 to 13, the trigger piece 351 includes a trigger portion 351a, where the trigger portion 351a includes a triggering surface 351b for being in contact with the pressure sensor 34. In this example, the trigger piece 351 is a sphere, the trigger portion 351a is a sphere portion, and the triggering surface 351b is a spherical surface. A hole is formed on the pressure sensor 34, where the hole is specifically a through hole 341, and the spherical surface is embedded into the through hole 341 to be in contact with an edge of the through hole 341. In other examples, the hole formed on the pressure sensor and for being in contact with the trigger piece may be a blind hole. As shown in FIG. 12, when the trigger piece 351 is in contact with the pressure sensor 34 but applies no force or a relatively small force F to the pressure sensor 34, a position of the through hole 341 is basically unchanged, and the triggering surface 351b is in contact with the edge of the through hole 341 and applies the force F uniformly to a circle of the edge so that the force F applied by the trigger piece 351 to the pressure sensor 34 extends along the first straight line 300a. As shown in FIG. 13, when the force F applied by the trigger piece 351 to the pressure sensor 34 is relatively large, the pressure sensor 34 is deformed, and the through hole 341 changes in position but is still symmetric about a plane passing through the first straight line 300a so that the force F applied by the trigger piece 351 to the pressure sensor 34 still extends along the first straight line 300a. In this manner, the spherical surface on the trigger piece 351 is in contact with the through hole 341 so that the force F received by the pressure sensor 34 extends basically along the direction of the first straight line 300a, thereby improving the detection accuracy. It is to be noted that the sphere portion is part of a sphere. The sphere portion may be part of a standard sphere or may be part of a shape similar to a sphere, for example, the sphere portion is part of a shape similar to a duck egg. That is to say, the sphere portion is not strictly required to be part of a standard sphere in shape, and any solution that can basically achieve the preceding technical effect of improving the detection accuracy of the present application belongs to the protection scope of the present application.

In this example, an area of a projection of the triggering surface 351b on a plane perpendicular to the first straight line 300a is greater than an area of a projection of the through hole 341 on this plane. In this manner, even if the sphere rotates when the pressure sensor 34 is deformed, the triggering surface 351b is always in contact with the through hole 341 through the spherical surface. A projection of a part of the triggering surface 351b in contact with the through hole 341 on the plane perpendicular to the first straight line 300a is still symmetric about the first straight line 300a so that the force F applied by the triggering surface 351b to the pressure sensor 34 still extends along the first straight line 300a.

The pressure sensor 34 is connected to the operation member 31, the trigger piece 351 is disposed between the pressure sensor 34 and the connecting rod assembly 32, and along the direction of the first straight line 300a, a position of the trigger piece 351 relative to the connecting rod assembly 32 remains fixed so that a detection error caused by a displacement of the sphere can be further reduced. In other examples, the pressure sensor may be connected to the connecting rod assembly, the trigger piece is connected to the operation member, and the trigger piece is a sphere disposed between the operation member and the pressure sensor. In this case, a position of the pressure sensor relative to the connecting rod assembly along the direction of the first straight line remains fixed.

It is to be understood that the triggering surface 351b is at least part of a spherical surface. In this example, the triggering surface 351b is a complete spherical surface.

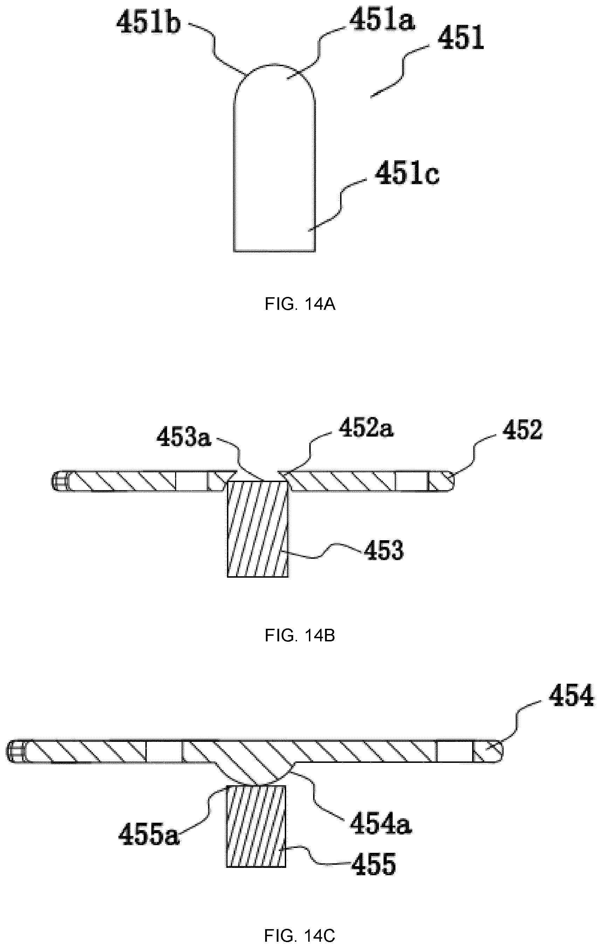

In other examples, the trigger piece may not be in the shape of a sphere. For example, in the example shown in FIG. 14, a trigger piece 451 includes a main body 451c and a sphere portion 451a for being in contact with the pressure sensor, where the sphere portion 451a is part of a sphere, and a triggering surface 451b formed on the sphere portion 451a and used for being in contact with the pressure sensor is a semi-spherical surface. Similarly, it is to be understood that in other examples, the sphere portion 451a may be integrally formed with the slider. In this manner, as long as one sphere portion 451a is formed at an end of the slider, a force may be applied to the pressure sensor along the direction of the first straight line 300a.

In the example shown in FIG. 14A, the triggering surface 451b is a semi-spherical surface. In other examples, a ratio of an area of the triggering surface to an area of the corresponding spherical surface may be any value.

In the example shown in FIG. 14B, a pressure sensor 452 is formed with a triggered surface 452a for being in contact with a triggering surface 453a of a trigger piece 453, where the triggered surface 452a is part of a spherical surface in shape, and the triggering surface 453a may be a plane. In this example, the triggered surface 452a is a hole wall of a hole, where the hole wall is part of a spherical surface.

Alternatively, in the example shown in FIG. 14C, a triggered surface 454a formed on a pressure sensor 454 is a surface of a sphere portion that protrudes upward, the surface of the sphere portion is part of a spherical surface, and a triggering surface 455a of a trigger piece 455 may be a plane.

The preload element 36 is used for biasing the trigger assembly 35 such that the trigger assembly 35 applies a preload force to the pressure sensor 34. In this manner, a nonlinear electrical signal outputted by the pressure sensor 34 at the beginning of deformation can be filtered out, thereby improving the accuracy of the signal processed by the signal processing device.

The handle device 30 further includes a support piece 37, where the support piece 37 is used for supporting the slider 352 and disposed in the first accommodation cavity 331 formed by the housing 33. The support piece 37 is also fixedly connected to the operation member 31. The support piece 37 may also be considered as part of the first whole so that the support piece 37, the operation member 31 and the pressure sensor 34 constitute the preceding first whole. When the user applies the thrust to the grip 311, the support piece 37, the operation member 31 and the pressure sensor 34 together generate a slight motion relative to the second whole along the direction of the first straight line 300a. It is to be noted that a distance of the motion of the first whole relative to the second whole is less than or equal to 3 mm, and the motion of the first whole relative to the second whole is used for providing the trigger piece 351 with a stroke for deforming the pressure sensor 34. That is to say, the distance of the motion of the first whole along the first straight line 300a is the same as a moving stroke of the trigger piece 351 and is also the same as a magnitude of the deformation of the pressure sensor 34. Therefore, the operation member 31, the pressure sensor 34 and the support piece 37 generate a very small motion relative to the connecting rod assembly 32, and the user hardly senses that the operation member 31, the pressure sensor 34 and the support piece 37 move relative to the connecting rod assembly 32. In other words, the user may consider that the operation member 31, the pressure sensor 34 and the support piece 37 do not move relative to the connecting rod assembly 32.

In this example, the operation member 31 and the pressure sensor 34 are both disposed outside the housing 33, and the support piece 37 is disposed in the housing 33. The screws 392 penetrate through the support piece 37, the pressure sensor 34 and the operation member 31 in sequence such that the three are fixedly connected together to form the first whole. The support piece 37 is formed with a support hole 371, and the slider 352 includes a sliding portion 352a disposed in the support hole 371 and a driving portion 352b in contact with the trigger piece 351. The preload element 36 is disposed in the first accommodation cavity 331 formed by the housing 33 and biases the driving portion 352b. In this example, the preload element 36 is a spring. Further, the preload element 36 is a Belleville spring, where the Belleville spring is sleeved on the sliding portion 352a and supports the driving portion 352b. In other examples, the preload element 36 may be a coil spring or a rubber piece. The preload element 36 indirectly biases the trigger piece 351 through the slider 352 so that the trigger piece 351 is always in contact with the pressure sensor 34.

When the operation member 31 receives the thrust, the first whole moves relative to the second whole, and a relative motion for deforming the pressure sensor 34 is generated by the support piece 37 relative to the slider 352 along the direction of the first straight line 300a. A stroke of the relative motion is the same as a stroke of the motion of the first whole relative to the second whole. A maximum value of the relative motion between the support piece 37 and the slider 352 is also less than or equal to 3 mm. In this example, in fact, the slider 352 is fixed relative to the main machine 301, and the support piece 37 moves together with the operation member 31 relative to the main machine 301 so that the relative motion between the support piece 37 and the slider 352 is generated. Since the motion is relative, the motion of the support piece 37 relative to the slider 352 may be considered as a motion of the slider 352 relative to the support piece 37.

In other examples, the slider 352 may be further formed with a sliding hole, and the support piece 37 extends into the sliding hole to support the slider 352.

In this example, the support piece 37 is made of a first material, and the slider 352 is made of a second material, where the second material is different from the first material. The support piece 37 and the slider 352 are made of different materials separately so that the support piece 37 and the slider 352 have different viscosity, thereby reducing a coefficient of friction between the support piece 37 and the slider 352. In this manner, when the relative motion between the support piece 37 and the slider 352 is generated, a relatively small friction is generated between the support piece 37 and the slider 352 so that the pressure sensor 34 can more accurately sense the thrust applied by the user to the grip 311, improving the detection accuracy of the pressure sensor 34 and the reliability of the lawn mower 300.

The coefficient of friction between the support piece 37 and the slider 352 is greater than 0 and less than or equal to 0.3 so that the force transmitted to the pressure sensor 34 is more accurate. Furthermore, the coefficient of friction between the support piece 37 and the slider 352 is greater than 0 and less than or equal to 0.1. To further reduce an effect of the friction between the support piece 37 and the slider 352 on the thrust applied by the user, the coefficient of friction between the support piece 37 and the slider 352 is greater than 0 and less than or equal to 0.05.

Specifically, in this example, the support piece 37 is a metal piece and the slider 352 is a plastic piece. In other examples, the support piece may be a plastic piece and the slider may be a metal piece. Alternatively, in an example, the first material is a first metal and the second material is a second metal, that is to say, the support piece and the slider are made of two different metal materials, separately.

Surface roughness Ra of the support piece 37 is less than or equal to 10 nm, and surface roughness Ra of the slider 352 is less than or equal to 10 nm. Furthermore, the surface roughness Ra of the support piece 37 is less than or equal to 3.2 nm, and the surface roughness Ra of the slider 352 is less than or equal to 3.2 nm. In this manner, when the support piece 37 and the slider 352 move relatively, the friction between the support piece 37 and the slider 352 is relatively small so that a measured value of the thrust detected by the pressure sensor 34 is more accurate. In other examples, the support piece and the slider may be made of the same material, for example, the support piece and the slider are both made of plastic. In this case, to reduce the friction factor between the support piece and the slider, the surface of the support piece or the slider may be plated with a metal layer, for example, the surface of the support piece or the slider is plated with chrome, which can reduce the surface roughness of the support piece and the slider. It is to be noted that, when the surface of the support piece or the slider is plated with a material layer, the surface roughness of the support piece or the slider refers to surface roughness of the material layer.

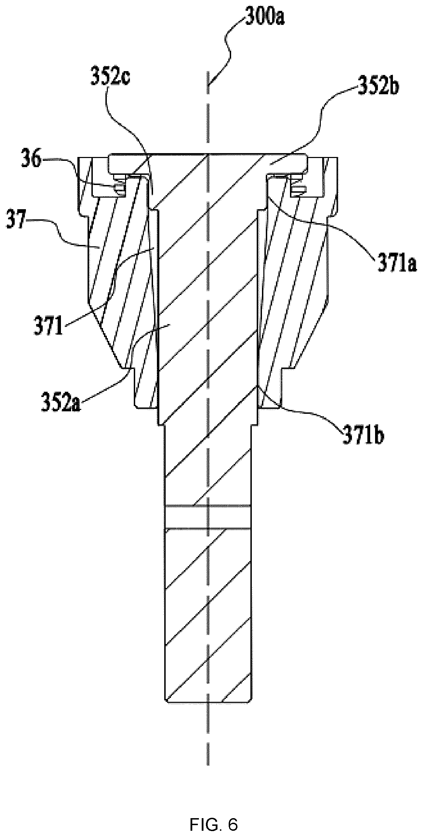

As shown in FIG. 6, the support hole 371 is centered on the first straight line 300a. The sliding portion 352a is partially disposed in the support hole 371. The support hole 371 has a first hole wall portion 371a and a second hole wall portion 371b. Along the direction of the first straight line 300a, the first hole wall portion 371a and the second hole wall portion 371b are disposed at different positions. The first hole wall portion 371a has a first inner diameter, and the second hole wall portion 371b has a second inner diameter, where the first inner diameter is greater than the second inner diameter. That is to say, the first hole wall portion 371a and the second hole wall portion 371b are cylindrical holes with different inner diameters, separately. The slider 352 is formed with a step structure 352c so that the slider 352 can be in contact with both the first hole wall portion 371a and the second hole wall portion 371b. In this manner, a contact area between the slider 352 and the support piece 37 can be reduced so that the effect of the relative motion between the slider 352 and the support piece 37 on the force is further reduced, thereby improving the accuracy with which the pressure sensor 34 detects the thrust applied by the user to the grip 311.

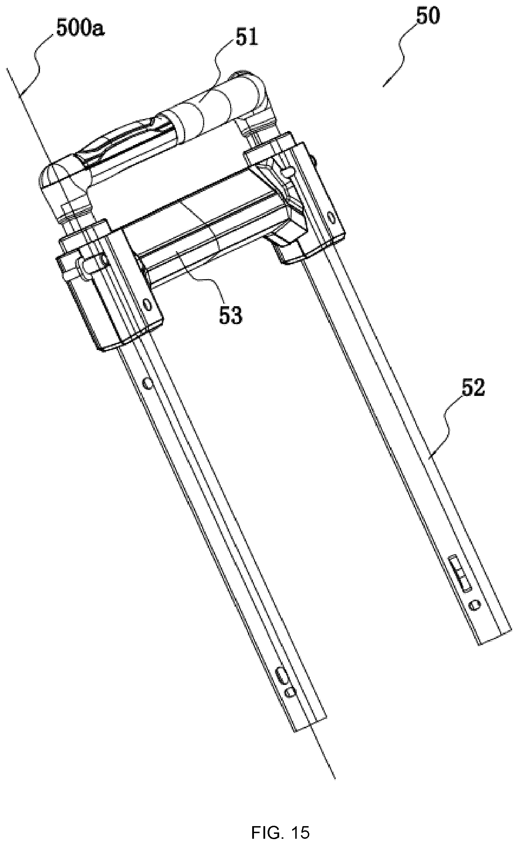

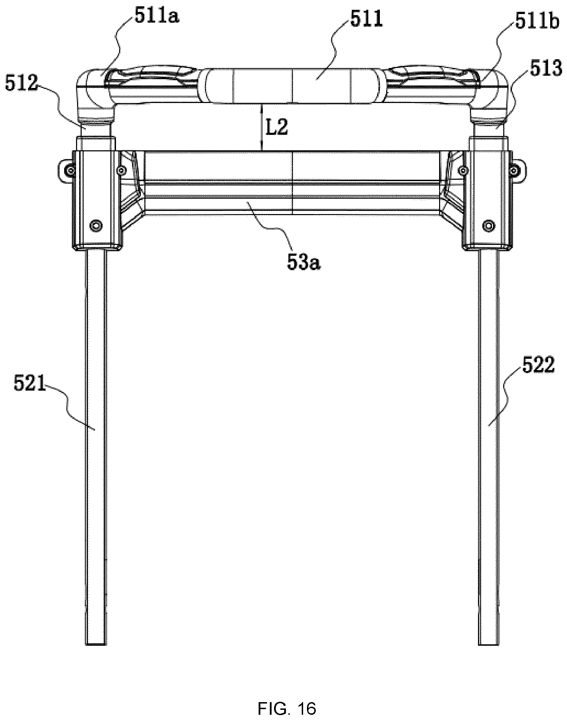

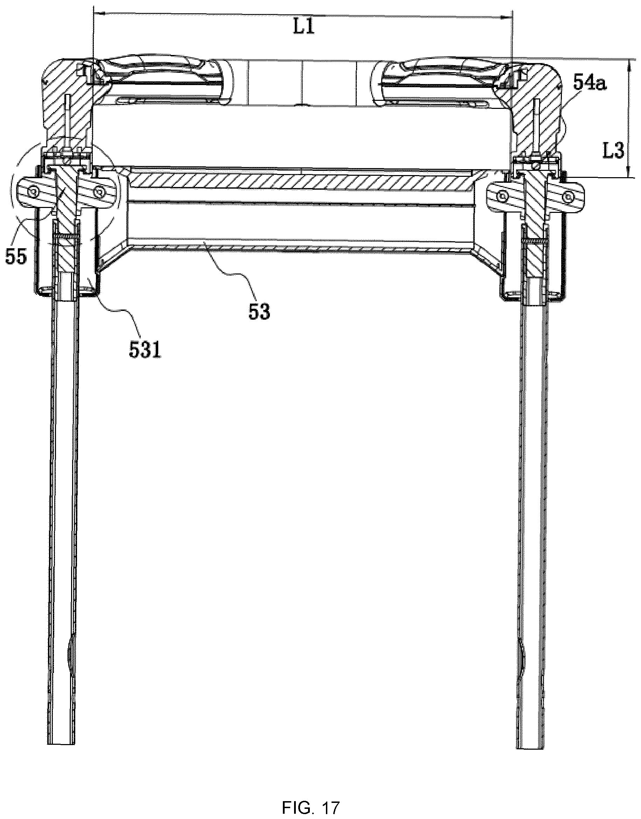

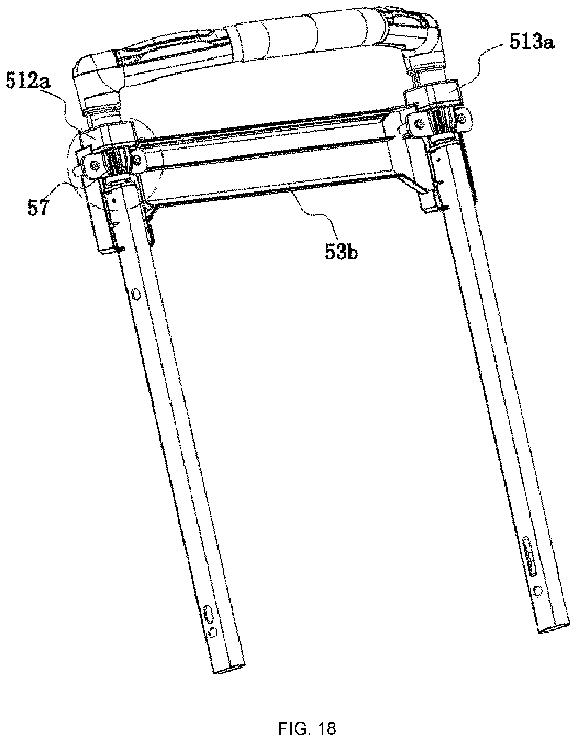

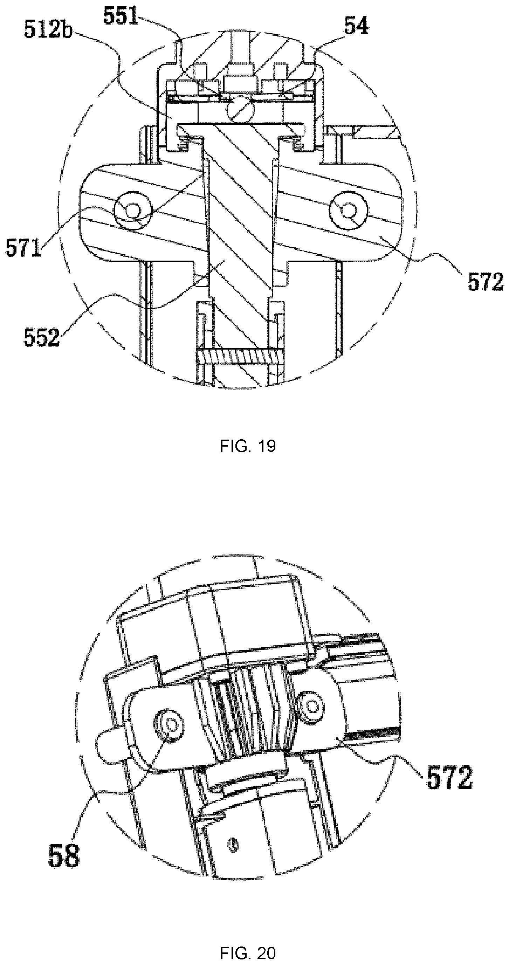

FIG. 15 is a perspective view of a handle device 50 of another lawn mower, and the lawn mower may be another rear-moving self-propelled working machine with the handle device 50. As shown in FIGS. 15 to 20, the lawn mower may have the same main machine as the lawn mower 300, and the handle device 50 has an operation member 51, a connecting rod assembly 52, a sensing device 54a, a trigger assembly 55, and a preload element that are the same as those of the handle device 50. The main difference is that the housing 33 is fixedly connected to the connecting rod assembly 32 in the lawn mower 300, while a housing 53 is fixedly connected to the operation member 51 in the lawn mower. Any structure of the lawn mower 300 applicable to the lawn mower in this example may be the same as that in this example, and details are not described in detail.

The operation member 51 includes a grip 511 for a user to hold, and two ends of the grip 511 along an extension direction of the grip 511 are defined as a first end 511a and a second end 511b, separately. The operation member 51 further includes a first mounting portion 512 and a second mounting portion 513, where the first mounting portion 512 includes a first mounting end 512a for mounting the sensing device 54a or a trigger piece 551, and the second mounting portion 513 includes a second mounting end 513a for mounting the sensing device 54a or the trigger piece 551. The sensing device 54a includes a pressure sensor 54 for sensing a thrust applied to the handle device 50 to drive the lawn mower, and when the grip 511 receives the thrust, the trigger piece 551 can apply a force to the pressure sensor 54 to drive the pressure sensor 54 to deform. The first mounting portion 512 is disposed at the first end 511a of the grip 511, and the second mounting portion 513 is disposed at the second end 511b of the grip 511. In this example, the first mounting end 512a is formed with a first mounting cavity 512b, the second mounting end 513a is formed with a second mounting cavity, two pressure sensors 54 are provided, and the two pressure sensors 54 are disposed in the first mounting cavity 512b and the second mounting cavity, separately. The trigger piece 551 can apply a force along a direction of a first straight line 500a to the pressure sensor 54.

The handle device 50 further includes a support piece 57 for supporting the operation member 51 and fixedly connected to the operation member 51, and the pressure sensor 54 is fixedly connected to the support piece 57 and the operation member 51. The trigger assembly 55 further includes a slider 552, where the slider 552 is fixedly connected to the connecting rod assembly 52. The support piece 57 is further formed with a support hole 571, and the slider 552 penetrates through the support hole 571 to be in contact with the trigger piece 551. When the user applies a force to the grip 511, a first whole constituted by the operation member 51, the support piece 57 and the pressure sensor 54 is slightly displaced relative to a second whole constituted by the trigger piece 551, the slider 552 and the connecting rod assembly 52, and the trigger piece 551 deforms the pressure sensor 54 through the slight displacement so that the pressure sensor 54 outputs a signal. The slight displacement is the same as a deformation amount of the pressure sensor 54.

In this example, the housing 53 is fixedly connected to the first mounting end 512a and the second mounting end 513a. Therefore, the housing 53 may be referred to as a connecting piece for fixedly connecting the first mounting end 512a and the second mounting end 513a. For ease of description, the technical solutions of the present application are described below with the housing 53 instead of the connecting piece. In fact, the housing 53 is the connecting piece. An extension direction of the first mounting portion 512 is the same as an extension direction of a first connecting rod 521, and an extension direction of the second mounting portion 513 is the same as an extension direction of a second connecting rod 522. The first mounting portion 512 extends along the first straight line 500a, and the second mounting portion 513 extends along a direction parallel to the first straight line 500a. The grip 511 is fixedly connected to upper ends of the first mounting portion 512 and the second mounting portion 513, and the housing 53 is fixedly connected to lower ends of the first mounting portion 512 and the second mounting portion 513. In this manner, the housing 53 can ensure that a distance L1 between the first mounting end 512a and the second mounting end 513a remains basically unchanged. On the one hand, the trigger piece 551 can apply the force to the pressure sensor 54 basically along the direction of the first straight line 500a. On the other hand, the housing 53 can avoid an increase of a friction between the support piece 57 and the slider 552 caused by a change of the distance L1 between the first mounting end 512a and the second mounting end 513a, thereby reducing an effect of the friction between the support piece 57 and the slider 552 on the force. The housing 53 is fixedly connected to the first mounting end 512a and the second mounting end 513a so that the pressure sensor 54 can more accurately detect the thrust applied by the user to the grip 511, thereby improving detection accuracy. The housing 53 is fixedly connected to the first mounting end 512a and the second mounting end 513a, the example is not limited to the direct connection between the housing 53 and the first mounting end 512a or the second mounting end 513a, and the housing 53 may be indirectly fixed to the first mounting end 512a and the second mounting end 513a through other parts. For example, in this example, part of the housing 53 is disposed between the first connecting rod 521 and the second connecting rod 522, two ends of the housing 53 are fixedly connected to two support pieces 57, separately, and the two support pieces 57 are fixedly connected to the first mounting portion 512 and the second mounting portion 513, separately, such that the housing 53 is fixedly connected to the first mounting portion 512 and the second mounting portion 513.

An end of the first mounting portion 512 is connected to the first end 511a of the grip 511, and the other end of the first mounting portion 512 is the first mounting end 512a, where the first mounting end 512a is away from the first end 511a. An end of the second mounting portion 513 is connected to the second end 511b of the grip 511, and the other end of the second mounting portion 513 is the second mounting end 513a, where the second mounting end 513a is away from the second end 511b.

The housing 53 is formed with a first accommodation cavity 531, the connecting rod assembly 52 is inserted into the first accommodation cavity 531, the support piece 57 is at least partially disposed in the first accommodation cavity 531, the housing 53 is fixedly connected to the support piece 57, and the support piece 57 is fixedly connected to the operation member 51 and the pressure sensor 54. The pressure sensor 54 is disposed outside the first accommodation cavity 531 and disposed in the first mounting cavity 512b and the second mounting cavity.

The housing 53 specifically includes a first housing portion 53a and a second housing portion 53b, where the first housing portion 53a and the second housing portion 53b can be separated from each other, and the first housing portion 53a can dock with the second housing portion 53b to form a whole. When the first housing portion 53a docks with the second housing portion 53b, the first housing portion 53a and the second housing portion 53b surround and form the first accommodation cavity 531 into which the connecting rod assembly 52 is inserted. In other examples, the operation member 51 may be inserted into the first accommodation cavity 531. The handle device 50 further includes a mount 58 for fixedly connecting the housing 53 to the support piece 57. In this example, the support piece 57 includes a protrusion 572 that protrudes out of the housing 53, and the mount 58 includes screws, where the screws penetrate through the first housing portion 53a, the protrusion 572 and the second housing portion 53b in sequence, thereby fixedly connecting the housing 53 to the support piece 57.

Along the direction of the first straight line 500a, a distance L2 between the grip 511 and the housing 53 is greater than or equal to 40 mm and less than or equal to 200 mm. A ratio of the distance L2 between the housing 53 and the grip 511 to a dimension L3 of the operation member 51 along the direction of the first straight line 500a is greater than or equal to 0.5 and less than 1. In this manner, the distance between the housing 53 and the grip 511 is large enough so that a distance between the first mounting portion 512 and the second mounting portion 513 can be better ensured.

When the first mounting end 512a and the second mounting end 513a are not fixedly connected by the housing 53, the operation member 51 may cause a change of the distance L1 between the first mounting end 512a and the second mounting end 513a since the user applies the thrust in a different direction; or the deformation of the operation member 51 due to long-term operation causes the distance L1 between the first mounting end 512a and the second mounting end 513a to change; or the operation member 51 is collided by another object, causing the distance L1 between the first mounting end 512a and the second mounting end 513a to change. All these cases cause a measured value of the thrust detected by the pressure sensor 54 to be different from an actual value of the thrust applied by the user to the grip 511. As a result, a speed of a motor controlled by a controller cannot adapt to a moving speed of the user or the thrust applied by the user. For example, before the housing 53 is connected to the first mounting end 512a and the second mounting end 513a, the distance L1 between the first mounting end 512a and the second mounting end 513a may vary within L±3 mm. After the housing 53 is fixedly connected to the first mounting end 512a and the second mounting end 513a, the distance L1 between the first mounting end 512a and the second mounting end 513a varies within L±0.5 mm, thereby greatly reducing the change of the distance between the first mounting end 512a and the second mounting end 513a of the operation member 51 and improving the detection accuracy of the pressure sensor 54.

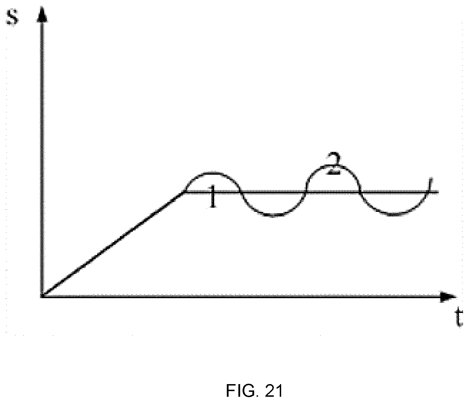

In some relatively advanced lawn mowers, a self-moving system of a lawn mower adaptively adjusts a moving speed of the lawn mower only by sensing a force applied by a user to the lawn mower. In general, in a process of speed adjustment, it is expected to obtain a smooth moving speed under an ideal condition shown by line 1 in FIG. 21. However, the acquisition of the speed is related to the integration of time, for example, the speed s = a * t, where a denotes a parameter related to a thrust. That is to say, the speed s is related to not only the thrust but also the time. Therefore, when the moving speed of the lawn mower is adjusted based on the thrust of the user, a response in speed has a certain lag. Thus, the speed fluctuates significantly as shown by line 2 in FIG. 1 in a later stage of adjustment, that is, a speed lag increases when the thrust of the user is large, and the speed lag decreases when the thrust of the user is small. Therefore, the user may feel pulled or hindered due to the fluctuation of the moving speed of the lawn mower, and the comfort of the user during mowing operation is still relatively poor. Therefore, another example of the present application provides a lawn mower 200 to solve the preceding problem.

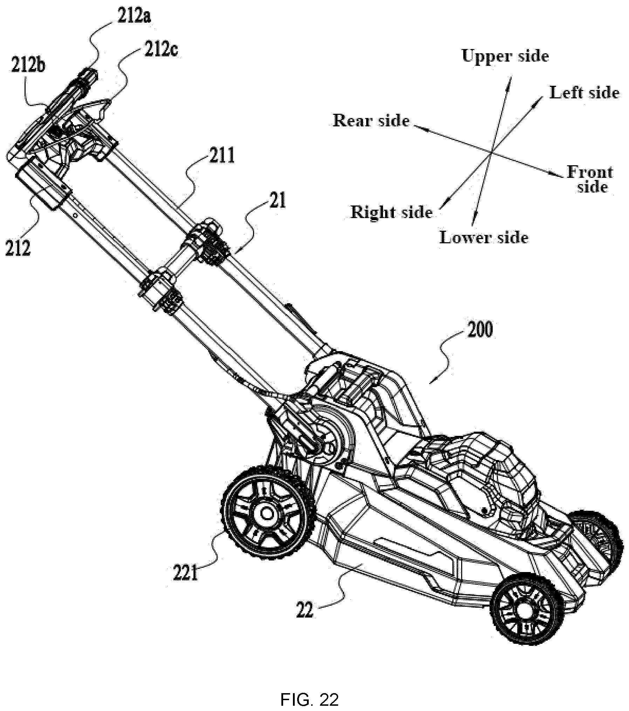

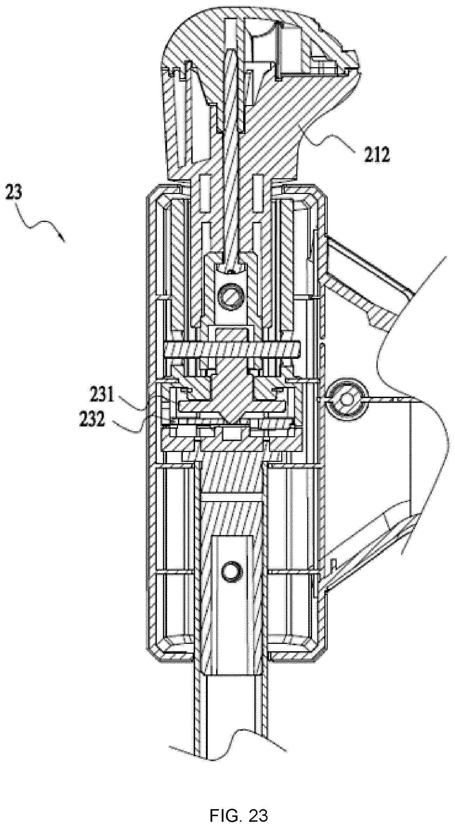

Referring to FIGS. 22 and 23, the lawn mower 200 mainly includes a handle device 21, a connecting rod 211, an operation member 212, an operation switch 212a, a main machine 22, and a moving assembly 221. The main machine 22 includes the moving assembly 221 and a power mechanism (not shown in the figure). Optionally, the handle device 21 includes the connecting rod 211 and the operation member 212 that can be held. The operation member 212 includes a grip for the user to hold and the operation switch 212a; the connecting rod 211 is a hollow long rod structure, and the connecting rod 211 connects the operation member 212 to the main machine 22. The moving assembly 221 is mounted onto the main machine 22 and can rotate around a rotation axis so that the entire lawn mower 200 can move on the ground.

To achieve a convenient operation and an effort-saving effect, the lawn mower 200 in this example has a self-moving control function. The power mechanism can drive the moving assembly 221 to rotate so as to drive the lawn mower 200 to move on the ground, so that the user does not need to manually push the lawn mower 200 to move. Specifically, the power mechanism may be a drive motor 222 which can output a driving force for driving the moving assembly 221 to rotate. In fact, in some examples, the handle device 21 of the lawn mower 200 is further integrated with a power button 212b and a trigger 212c. Exemplarily, the power button 212b, the trigger 212c, and the operation switch 212a of the lawn mower 200 are all integrated on the operation member 212. In addition, the operation switch 212a is not limited to a physical switch or a signal switch, and any device that can control a current in a circuit to be on or off is applicable. In fact, this type of operation switch 212a is not limited to current control and may also control the self-moving function to be enabled or disabled by mechanical means. To increase the convenience of the user's operation, this example provides the lawn mower 200 which is convenient to operate and can adaptively adjust output torque of the drive motor according to the thrust of the user so that the driving force of the motor under the output torque can reach a desired value. It is to be understood that different thrusts correspond to different driving forces, and the desired driving forces may be stored in a storage module of a control unit in advance. It is to be understood that the desired driving force outputted by the motor, the thrust of the user, and the resistance of the lawn mower can be balanced. That is, when the thrust of the user is relatively large, the driving force of the lawn mower increases, and when the thrust of the user is relatively small, the driving force of the lawn mower decreases. The driving force of the motor is directly adjusted to adaptively change with the thrust of the user. Since a rotational speed of the motor is not directly adjusted, the lag problem of rotational speed adjustment caused by time integration is avoided, and a real-time, efficient, smooth and non-blocking adaptive control process of the driving force of the motor is achieved so that the user follows in a more comfortable state.

In the example of the present application, a sensing module 23 is disposed between the operation member 212 and the main machine 22. The sensing module 23 may be specifically disposed on the main machine 22 or may be disposed at a position where the operation member 212 and a main body 22 are connected or at any position between the operation member 212 and the main body 22. In this example, the sensing module 23 is disposed between the operation member 212 and the connecting rod 211. The sensing module 23 can output a corresponding first signal by sensing the thrust from the operation member 212. In fact, the sensing module 23 outputs a different first signal in response to a different thrust from the operation member 212. In an example, the sensing module 23 may include a pressing piece 231 and a pressure sensor 232. The pressing piece 231 may be operated to trigger the pressure sensor 232 so that the sensor can process the thrust through strain and convert a magnitude of the thrust into the first signal for calculation or to issue an indication, where the first signal outputted by the pressure sensor may be an analog electrical signal, such as a voltage signal or a current signal or may be an optical signal. In the present application, the first signal is the electrical signal, such as the current signal or the voltage signal.

In the present application, a control unit 24 may acquire the first signal outputted by the pressure sensor and a second signal fed back by the drive motor and control the output torque of the drive motor according to the first signal and the second signal. The output torque of the drive motor is controlled so as to control the driving force of the motor. The second signal fed back by the motor may be a current signal, a voltage signal, the torque of the motor or the like. In the present application, the second signal is the current signal. That is to say, the lawn mower in the present application may adaptively adjust the driving force of the motor according to the thrust of the user so that the thrust applied by the user to the handle device is smaller. Therefore, the user can follow in a more comfortable state under a current thrust and control the lawn mower to work. Following in a comfortable state means that the user does not feel pulled or hindered when pushing the lawn mower to work. It is to be noted that when the user is in the state of following, the driving force of the motor under current output torque, the thrust of the user, and the resistance of the lawn mower in motion can reach a force balanced state within an allowable error range. In the force balanced state, a magnitude of the driving force is positively correlated to the magnitude of the thrust of the user. Exemplarily, it is assumed that the thrust applied by the user to the handle is F1, the control unit 24 adjusts the output torque of the motor according to the thrust, the driving force of the motor is F2 under the torque, and the moving resistance of the lawn mower is F3. When $F1 + F2 - F3 = F\lnot_{resultant} = ma$, the preceding three forces are in the force balanced state, where $F\lnot_{resultant}$ denotes a resultant force received by the lawn mower, m denotes the mass of the lawn mower, and a denotes moving acceleration of the lawn mower. It is to be understood that, assuming that the thrust F1 of the user increases, to avoid the user's uncomfortable feeling of strenuous operation due to the application of a relatively large thrust, the lawn mower increases its own driving force according to the thrust so that the increased driving force can overcome the resistance so as to control the lawn mower to continue moving. That is to say, the force balanced state refers to a state in which the thrust is relatively small and the driving force just overcomes the resistance to drive the lawn mower to move.

It is to be noted that, in the related art, the self-moving control system controls the torque of the motor according to the thrust of the user and controls the moving speed of the machine through the torque of the motor. As can be seen from the preceding formulas $F\lnot_{resultant} = ma$ and $s = a * t$, the speed needs to be controlled according to the torque through the integration of time, resulting in a lag of the response in speed. Thus, the user feels pulled or hindered and has relatively low comfort in the self-moving control. The driving force may change in real time in response to a change of the thrust so that a self-moving control process is smoother and the user feels more comfortable.

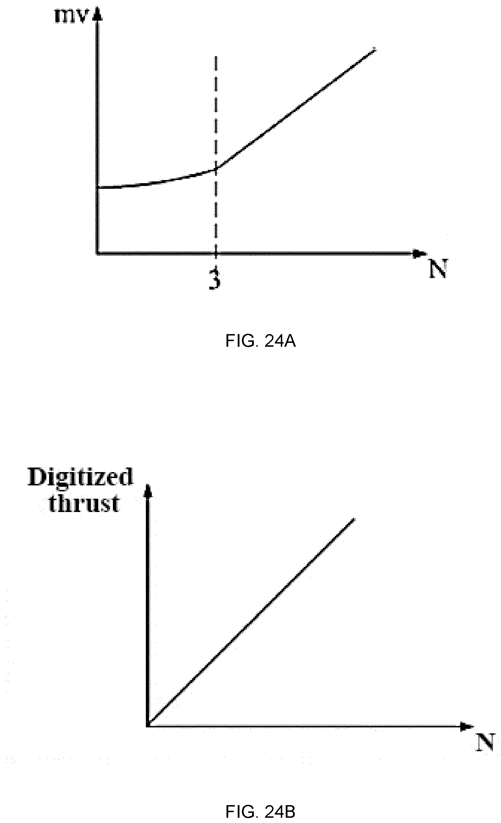

It is to be noted that since the magnitude of the deformation amount of the pressure sensor is relatively small after a force-receiving surface of the pressure sensor is triggered, the electrical signal outputted by the pressure sensor after the deformation is sensed is relatively weak, and the change of the signal is not apparent when the thrust is relatively small. For example, the amplitude of a voltage signal generated by the sensor by sensing the deformation is at an mv level. FIG. 24A shows a relationship between the electrical signal and the magnitude of the thrust. When the thrust is relatively small, the change of the electrical signal is not apparent. Therefore, since the signal is relatively weak, the signal is easily lost during a signal transmission process of the pressure sensor, and the change of the signal is not apparent when the thrust is relatively small, affecting the accuracy with which the moving speed of the lawn mower is controlled. Therefore, in the present application, a signal transmission device 233 may be configured to identify the electrical signal outputted by the pressure sensor and transmit the signal to the control unit through bus communication. In an example, the signal transmission device 233 may be disposed at any position adjacent to a periphery of the pressure sensor 232. The signal transmission device 233 acquires the electrical signal outputted by the sensor at a short distance and transmits the signal to the control unit at a long distance through the bus communication, avoiding the case where the electrical signal outputted by the pressure sensor is interfered by an external signal during the transmission to the control unit and the accuracy of the control is affected.

In an optional example, a first signal processing device may be further disposed between the pressure sensor and the signal transmission device, where the device may include a filter and a signal amplifier to perform operational amplification on the electrical signal outputted by the sensor to obtain a first processed signal. It is to be understood that the strength of the first processed signal is greater than the strength of the electrical signal outputted by the sensor, and the electrical signal outputted by the pressure sensor may be enhanced by the first signal processing device, thereby further ensuring that signal transmission of the electrical signal is not interfered by the external signal.

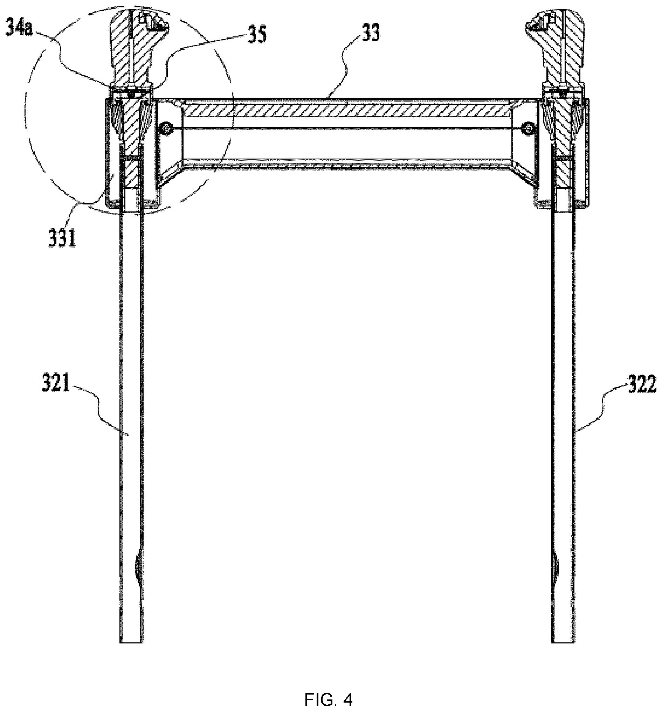

In an optional example, a second signal processing device may be further disposed between the pressure sensor and the signal transmission device, where the device may be integrated with elements such as an analog-to-digital conversion (ADC) chip and a single-chip microcomputer. After the ADC chip performs ADC on the electrical signal outputted by the sensor, the signal is accurately identified by the signal transmission device as a second processed signal, that is, a digital electrical signal. The electrical signal outputted by the pressure sensor can be digitized by the second signal processing device so that the signal transmission device can more easily identify and transmit the digitized electrical signal. For example, from the comparison of FIG. 4B with FIG. 4A, it can be seen that the electrical signal fed back by the pressure sensor is converted into a thrust signal and outputted directly in the form of a digitized thrust value, and the magnitude of the thrust can be accurately reflected even when the thrust is relatively small, ensuring the accuracy with which the moving speed of the lawn mower is controlled.

It is to be understood that both the first processed signal and the second processed signal are obtained through the first level processing on the electrical signal outputted by the pressure sensor, so as to enhance the strength of the signal and avoid the case where the signal is interfered during transmission, affecting the accuracy of the self-moving control.

In addition, due to various factors such as different habits of users or different working conditions, it is possible that the pressure detected on one side cannot accurately reflect the magnitude of the pressure actually received by the lawn mower. To increase the sensitivity and accuracy of the pressure sensor 232 receiving a pressure signal, the pressure sensor may further include a first sensor and a second sensor. The first sensor and the second sensor are disposed at two positions where the operation member 212 and the connecting rod 211 are connected, separately. The first sensor is disposed at a left connection position of the operation member 212 and the connecting rod 211, and the second sensor is disposed at a right connection position of the operation member 212 and the connecting rod 211, where the left connection position and the right connection position may be located at the same position in a horizontal or vertical direction or at different positions in the horizontal or vertical direction. In fact, since the first sensor and the second sensor are installed at different positions and might be affected by the operation of the user, a difference between a first signal and a second signal inputted to a signal processing device 233 is relatively large, and the signal processing device 233 needs to superimpose electrical signals from the first sensor and the second sensor. Specifically, the signal processing device 233 may calculate a thrust value that directly reflects the magnitude of the thrust actually received by the lawn mower according to a sum of the electrical signals outputted by the two sensors.

In addition, in an actual operation process, the first signal and the second signal outputted by the two sensors may also be calibrated, for example, weighted using different coefficients so that a total force inputted by the user can be accurately identified, thereby effectively avoiding erroneous determination when a single sensor is touched. On the other hand, the following case can be effectively avoided: the user who is accustomed to using the right hand or the left hand applies an unbalanced force on the operation member 212 and thus erroneous determination occurs. As another optional example, only one pressure sensor may be provided. A relatively smart sensor is disposed so that a signal is identified according to the operation of the user and a signal is outputted so as to control the self-moving function of the lawn mower 200. Specifically, the preceding sensor may be disposed at any position between the operation member 212 and the connecting rod 211 or disposed on a side of the operation member 212 and the connecting rod 211 or disposed at a position where the connecting rod 211 and the main machine 22 are connected and can generate a signal for output through changes of the force applied to the connecting rod 211 or the main machine 22 and a displacement, so as to control the self-moving function of the lawn mower 200 through the signal. In another example, the pressure sensor 232 may be disposed on the grip of the operation member 212, a gripping force from the hands of the user may directly act on the pressure sensor, and the pressure sensor 232 may feedback the electrical signal according to the sensed thrust applied to the handle device to drive the rear-moving self-propelled working machine. In this example, the first sensor and the second sensor are specifically two identical pressure sensors. The pressure sensors may specifically be contact pressure sensors or contactless pressure sensors.

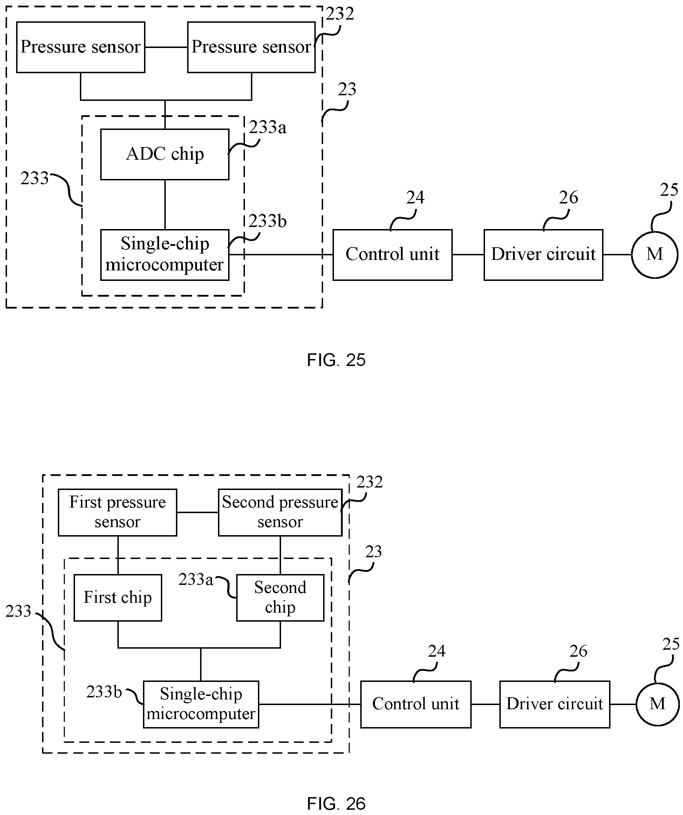

FIG. 25 shows a control principle of the lawn mower. As shown in FIG. 25, the signal processing device 233 may be provided to digitize the electrical signal outputted by the pressure sensor. Specifically, the signal processing device enhances and/or digitizes the electrical signal and finally outputs the electrical signal outputted by the sensor in the form of a thrust value, where the thrust value is the magnitude of the thrust when the user pushes the lawn mower by hand. Further, the signal processing device 233 may transmit the thrust value to the control unit 24 through serial communication or bus communication, and the control unit 24 controls a driver circuit 26 to change an on state to change output torque of a drive motor 25, that is, to change a driving force of the motor, so that the user gains greater operation comfort with a smaller thrust. In an optional example, the signal processing device 233 is included in the sensing module 23, for example, disposed on the pressure sensor or at a position adjacent to the periphery of the pressure sensor. That is to say, when the electrical signal outputted by the pressure sensor is relatively weak, the electrical signal outputted by the pressure sensor is enhanced by the adjacent signal processing device and then transmitted to the control unit 24 instead of being directly outputted, so as to avoid a signal loss during transmission.

In an example, the signal processing device may include a filter and a signal amplifier to filter and amplify the electrical signal outputted by the pressure sensor to obtain an enhanced electrical signal.

In fact, in the present application, the signal processing device 233 may include an ADC chip 233a and a single-chip microcontroller 233b. The ADC chip 233a is directly electrically connected to the pressure sensor 232 to receive the electrical signal fed back by the sensor and perform ADC on the electrical signal. The single-chip microcomputer 233b can acquire the converted electrical signal outputted by the ADC chip, generate a corresponding thrust signal accordingly, and then transmit the thrust signal to the control unit 24 through serial communication or bus communication. Further, the control unit 24 may control an on state of each switching element in the driver circuit 26, so as to change the output torque of the drive motor 25.

In an example, the sensing module 23 may further include a display device (not shown in the figure). When the signal processing device 233 obtains the thrust value after processing, the display device may display the current thrust signal. Optionally, the display device may be independent of the sensing module and disposed at a position where the user is convenient to view the display device, for example, disposed at the handle device.

It is to be understood that the thrust signal in the form of the digitized thrust value is convenient to observe and transmit, but the control unit cannot directly control an electric motor to change output torque according to the digitized thrust signal. In an example, the thrust signal outputted by the single-chip microcontroller 233b may be converted into a control electrical signal by the control unit 24, where the control electrical signal may be a current signal or a voltage signal. The control unit 24 controls the on state of the switching element of the driver circuit according to the control electrical signal, so as to change the output torque of the drive motor so that the driving force of the drive motor can overcome the resistance of the lawn mower, allowing the user to control the lawn mower to move with a smaller thrust. It is to be understood that the output torque of the drive motor 25 is positively correlated to the thrust value, that is, when the thrust of the user is relatively large, the output torque of the drive motor increases and the driving force increases; and when the thrust of the user decreases, the output torque of the drive motor decreases and the driving force decreases.

In an example, when the user turns on the operation switch 212a and pushes the lawn mower 200 to move forward, the user applies a relatively large thrust to the operation member 212. At this time, the pressure sensor 232 transmits a relatively large electrical signal, where the signal is processed by the signal processing device 233, that is, the electrical signals from the two pressure sensors are subjected to the ADC and digitized and merged through the ADC chip and the single-chip microcomputer; and the merged signal is transmitted to the control unit, converted into the control electrical signal by the control unit, and transmitted to the driver circuit 26, and the driver circuit 26 controls, according to the control electrical signal, the drive motor 25 to output relatively large torque. When the thrust applied by the user to the operation member 212 becomes smaller under some working conditions (for example, downhill), the pressure sensor transmits a relatively small electrical signal, where the signal is processed by the signal processing device 233, transmitted to the control unit 24, converted into the control electrical signal by the control unit, and transmitted to the driver circuit, and the driver circuit controls, according to the control electrical signal, the drive motor to output relatively small torque. Optionally, when the user does not touch the operation member 212 or is away from the operation member, the pressure sensor senses no thrust and no longer outputs an electrical signal, and the driver circuit controls, according to a change in value of the electrical signal in the circuit, the drive motor 25 to stop rotating, so as to stop the lawn mower 200.

In an optional example, to prevent the torque of the motor from being frequently changed and the performance of the lawn mower from being affected, the control unit may determine, according to the magnitude of the force applied by the user to the sensor, whether the torque of the motor needs to be changed. That is to say, when the change of the thrust of the user is relatively small, it means that the user operates by hand with no apparent change felt, and the driving force of the motor does not need to be changed. However, when a variation of the thrust is greater than or equal to a variation threshold, that is, when the thrust of the user suddenly increases or decreases, the control unit 24 controls the output torque of the drive motor according to the electrical signal outputted by the pressure sensor so that the driving force of the drive motor under the output torque, the thrust, and the resistance of the rear-moving self-propelled working machine in motion reach a force balance within an allowable error range.

It is to be understood that in the traditional control manner of adjusting a speed through a switch, when the user toggles a speed regulation switch to a fixed position, the lawn mower moves at a fixed speed. In this case, due to different loads of the lawn mower and different moving speeds of the user, the drive motor may not work in an appropriate current range, resulting in the waste of power. In the present application, magnitudes of a working current may be given according to magnitudes of the thrust of the user under different working conditions, so as to control the torque of the motor and avoid energy waste caused by working at a fixed working current under a fixed moving speed. In the present application, when the pressure sensor includes the first sensor and the second sensor, the two pressure sensors are connected to the ADC chip together. In fact, since the first sensor and the second sensor are installed at different positions and might be affected by the operation of the user, the difference between the first signal and the second signal inputted to the ADC chip is relatively large, and thus the ADC chip needs to superimpose the electrical signals from the first sensor and the second sensor. In addition, in an actual operation process, the inputted first signal and the inputted second signal need to be calibrated by the ADC chip 233a and/or the single-chip microcomputer 233b, for example, weighted using different coefficients so that the total force inputted by the user can be accurately identified, thereby effectively avoiding erroneous determination when a single sensor is touched. In another example, as shown in FIG. 26, the ADC chip includes a first chip and a second chip. The first chip is connected to the first sensor, the second chip is connected to the second sensor, and the two chips receive the electrical signals from the two pressure sensors and perform ADC separately and output the converted electrical signals to the single-chip microcontroller. The single-chip microcomputer may superimpose and calibrate the electrical signals from the two chips as described above, so as to accurately identify the force of the user.

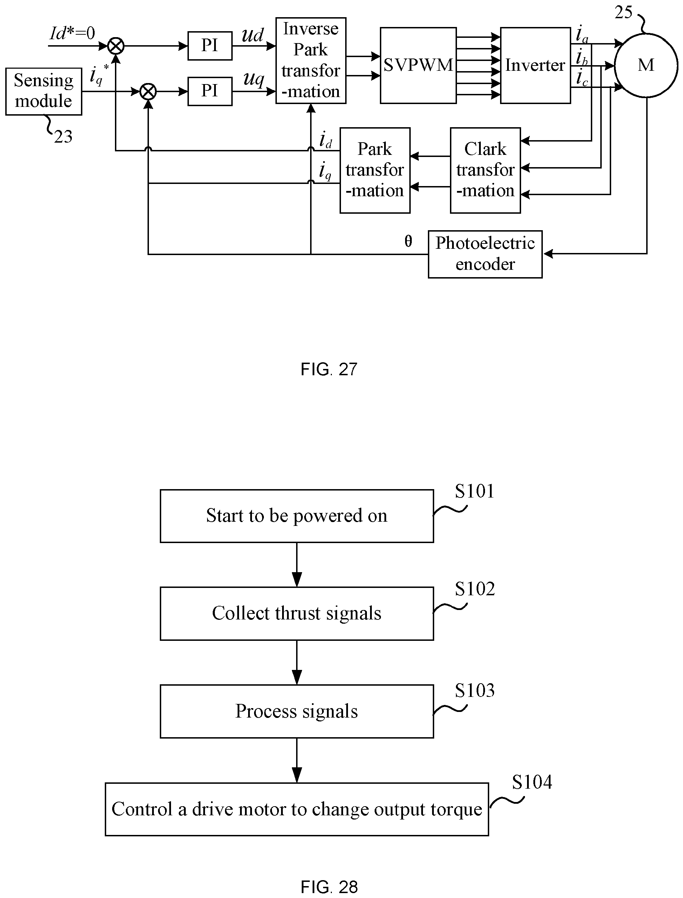

In another example of the present application, the control unit may acquire a phase current fed back by the drive motor and control the output torque of the drive motor according to the phase current and the electrical signal fed back by the pressure sensor so that the driving force of the motor can overcome the resistance, allowing the user to perform comfortable following and control with a smaller thrust. That is to say, the electrical signal fed back by the pressure sensor is a current signal. As shown in FIG. 27, the current signal fed back by the pressure sensor may be decomposed into a direct-axis current signal $i_q{}^*$ that affects the output torque of the drive motor and a quadrature-axis current signal $i_d{}^*$ that affects a magnetic potential of the motor. In a specific example, $i_d{}^*$ is set to zero, and $i_q{}^*$ is inputted to a field-oriented control (FOC) current loop control circuit as a set current value to act together with the phase current $i_q$ fed back by the drive motor to control the output torque of the drive motor. It is to be noted that in the present application, three-phase currents $i_a$, $i_b$ and $i_c$ fed back by the drive motor in the FOC current control are subjected to Clark transformation and Park transformation, so as to obtain the actual direct-axis current $i_q$ that can reflect the torque of the motor and the actual quadrature-axis current $i_d$ that can reflect the magnetic potential of the motor. Since the FOC current loop control circuit is a very mature electric motor control manner, details are not described here. In this example, the quadrature-axis current signal $i_d{}^*$ outputted by the signal processing device is set to zero, and only $i_q{}^*$ is used as the control electrical signal affecting the output torque of the motor, so as to control the output torque of the motor by the current. It is to be understood that the current signal is positively correlated to the output torque of the drive motor, and the current signal is positively correlated to the thrust signal reflecting the thrust value. That is to say, the greater the thrust of the user, the greater the current, and the greater the output torque of the electric motor; and vice versa.

In the present application, the motion control of the lawn mower is achieved by directly using FOC current loop control, simplifying the control manner, reducing the amount of calculation, and improving the response speed and the mowing efficiency of the machine; at the same time, compared with the manner of controlling the rotational speed of the motor, the manner of directly controlling the output torque of the motor brings a better feeling of actual operation by hand and makes the adjustment process smoother.

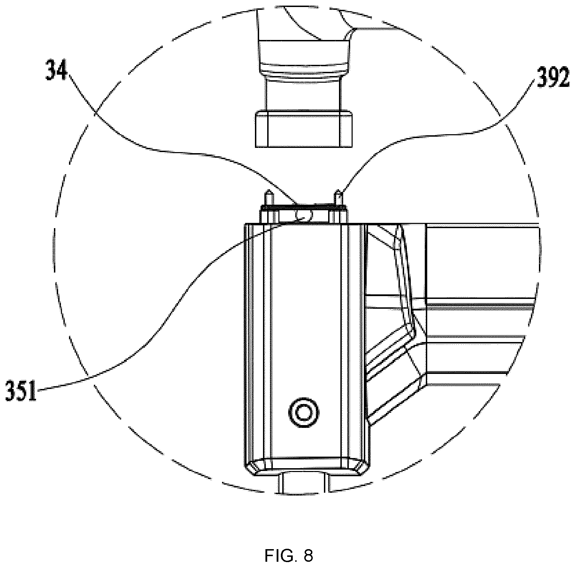

As shown in FIG. 8, the present application further provides a method for the rear-moving self-propelled working machine. The method includes the steps described below

In S101, the rear-moving self-propelled working machine starts to be powered on. That is, a lawn mower 100 is connected to a power source, and a power switch is in an on stage.

In S102, first signals fed back by pressure sensors are collected. At this time, two pressure sensors begin to collect the thrust of the user and feed back the corresponding signals.

In S103, the signals are processed.

In the present application, the signal processing specifically includes signal enhancement performed by the signal processing device, such as the ADC performed by the ADC chip and the digitization performed by the single-chip microcomputer, so as to obtain the thrust signal. In addition, the signal processing further includes the conversion of the thrust signal into the control electrical signal by the control unit, so as to control the on state of the driver circuit.

In S104, the drive motor is controlled to change the output torque.

**Claims**

1. A rear-moving self-propelled working machine, comprising:

   a main machine (301) comprising a moving assembly (304) and a motor (305) for driving the moving assembly; and
   a handle device (30, 50) connected to the main machine;
   wherein the handle device comprises:

   an operation member (31, 51) comprising a grip (311, 511) for a user to hold;
   a connecting rod assembly (32, 52) comprising a first connecting rod (321, 521) connected to the main machine;
   a sensing device (34a, 54a) for sensing a thrust applied to the handle device to drive the rear-moving self-propelled working machine; and
   a trigger assembly (35, 55) capable of applying a force to the sensing device when the grip receives the thrust; **characterized in that**
   the trigger assembly is connected to the connecting rod assembly, and the sensing device is connected to the operation member.

2. The rear-moving self-propelled working machine of claim 1, wherein the sensing device comprises a pressure sensor (34, 54), and the trigger assembly applies the force to the pressure sensor to drive the pressure sensor to deform when the grip receives the thrust.

3. The rear-moving self-propelled working machine of claim 2, wherein the handle device further comprises a housing (33, 53) formed with a first accommodation cavity (331, 531), the first connecting rod extends into the first accommodation cavity, the operation member is formed with a second accommodation cavity (314, 512b), and the pressure sensor is at least partially disposed in the second accommodation cavity.

4. The rear-moving self-propelled working machine of either one of claims 2 and 3, wherein the operation member is disposed outside the housing.

5. The rear-moving self-propelled working machine of any one of claims 2 to 4, wherein the pressure sensor is disposed outside the housing.

6. The rear-moving self-propelled working machine of any one of claims 2 to 5, wherein the trigger assembly comprises:

   a trigger piece (351, 551) for applying the force to the pressure sensor; and
   a slider (352, 552) connected to the first connecting rod;
   wherein the handle device further comprises a support piece (37, 57) for supporting the slider, the slider is in contact with the trigger piece, the support piece is fixedly connected to the operation member, and the slider penetrates through the support piece.

7. The rear-moving self-propelled working machine of claim 6, wherein when the operation member receives the thrust, a relative motion between the support piece and the slider is capable of being generated to deform the pressure sensor, wherein a maximum value of the relative motion between the support piece and the slider is less than or equal to 3 mm.

8. The rear-moving self-propelled working machine of either one of claims 6 and 7, wherein the support piece is disposed in the housing.

9. The rear-moving self-propelled working machine of either one of claims 6 to 8, wherein the trigger piece comprises a sphere portion in contact with the pressure sensor.

10. The rear-moving self-propelled working machine of claim 9, wherein the trigger piece is a sphere.

11. The rear-moving self-propelled working machine of any one of the preceding claims, wherein the sensing device comprises a pressure sensor (34, 54) and the handle device further comprises:
    a preload element (36) for biasing the trigger assembly to apply a preload force to the pressure sensor.

12. The rear-moving self-propelled working machine of any one of the preceding claims, wherein the connecting rod assembly further comprises a second connecting rod (322, 522) connected to the main machine, and the handle device further comprises a housing (33, 53) connecting the first connecting rod and the second connecting rod, the housing is formed with a first accommodation cavity (331, 531), and the first connecting rod extends into the first accommodation cavity.

13. The rear-moving self-propelled working machine of claim 12, wherein the pressure sensor is disposed outside the housing.

14. The rear-moving self-propelled working machine of any one of the preceding claims, wherein the operation member is formed with an accommodation cavity (314, 512b), and the pressure sensor is at least partially disposed in the accommodation cavity.

15. The rear-moving self-propelled working machine of claim 14, wherein the pressure sensor is fixedly connected to the operation member through screws.

**Patentansprüche**

1. Selbstfahrende Arbeitsmaschine mit Heckantrieb, umfassend:

   eine Hauptmaschine (301) mit einer beweglichen Baugruppe (304) und einem Motor (305) zum Antrieb der beweglichen Baugruppe; und
   eine Griffvorrichtung (30, 50), die mit der Hauptmaschine verbunden ist;
   wobei die Griffvorrichtung umfasst:

   ein Betätigungselement (31; 51) mit einem Griff (311, 511), den ein Benutzer halten kann;
   eine Verbindungsstangenanordnung (32, 52) mit einer ersten Verbindungsstange (321, 521), die mit der Hauptmaschine verbunden ist;
   eine Sensoreinrichtung (34a; 54a) zum Erfassen eines Schubs, der auf die Griffvorrichtung ausgeübt wird, um die heckgetriebene selbstfahrende Arbeitsmaschine anzutreiben; und
   eine Auslöseeinheit (35; 55), die in der Lage ist, eine Kraft auf die Erfassungsvorrichtung auszuüben, wenn der Griff den Druck aufnimmt; **dadurch gekennzeichnet, dass** die Auslöseeinheit mit der Verbindungsstangeneinheit verbunden ist und die Abtastvorrichtung mit dem Betätigungselement verbunden ist.

2. Selbstfahrende Arbeitsmaschine mit Heckantrieb nach Anspruch 1, wobei die Sensoreinrichtung einen Drucksensor (34, 54) umfasst, und die Auslöseeinheit übt die Kraft auf den Drucksensor aus, damit sich der Drucksensor verformt, wenn der Griff den Druck aufnimmt.

3. Selbstfahrende Arbeitsmaschine mit Heckantrieb nach Anspruch 2, wobei die Griffvorrichtung ferner ein Gehäuse (33; 53) umfasst, das mit einem ersten Aufnahmehohlraum (331, 531) ausgebildet ist, die erste Verbindungsstange in den ersten Aufnahmehohlraum hineinragt, das Betätigungselement mit einem zweiten Aufnahmehohlraum (314, 512b) ausgebildet ist, und der Drucksensor zumindest teilweise im zweiten Aufnahmehohlraum angeordnet ist.

4. Selbstfahrende Arbeitsmaschine mit Heckantrieb nach einem der Ansprüche 2 und 3, wobei das Betätigungselement außerhalb des Gehäuses angeordnet ist.

5. Selbstfahrende Arbeitsmaschine mit Heckantrieb nach einem der Ansprüche 2 bis 4, wobei der Drucksensor außerhalb des Gehäuses angeordnet ist.

6. Selbstfahrende Arbeitsmaschine mit Heckantrieb nach einem der Ansprüche 2 bis 5, wobei die Auslösevorrichtung umfasst:

   ein Triggerstück (351, 551) zum Aufbringen der Kraft auf den Drucksensor; und
   einen Schieber (352, 552), der mit der ersten Verbindungsstange verbunden ist;
   wobei die Griffvorrichtung außerdem ein Stützteil (37, 57) zum Abstützen des Schiebers umfasst, der Schieber ist in Kontakt mit dem Triggerstück, das Stützteil ist fest mit dem Betätigungselement verbunden, und der Schieber geht durch das Stützteil hindurch.

7. Selbstfahrende Arbeitsmaschine mit Heckantrieb nach Anspruch 6, bei der, wenn das Betätigungselement den Schub erhält, eine Relativbewegung zwischen dem Stützteil und dem Schieber erzeugt werden kann, um den Drucksensor zu verformen, wobei ein Maximalwert der Relativbewegung zwischen dem Stützteil und dem Schieber kleiner oder gleich 3 mm ist.

8. Selbstfahrende Arbeitsmaschine mit Heckantrieb nach einem der Ansprüche 6 und 7, wobei das Stützteil im Gehäuse angeordnet ist.

9. Selbstfahrende Arbeitsmaschine mit Heckantrieb nach einem der Ansprüche 6 bis 8, wobei das Triggerstück einen mit dem Drucksensor in Kontakt stehenden Kugelabschnitt umfasst.

**10.** Selbstfahrende Arbeitsmaschine mit Heckantrieb nach Anspruch 9, wobei das Triggerstück eine Kugel ist.

**11.** Selbstfahrende Arbeitsmaschine mit Heckantrieb nach einem der vorhergehenden Ansprüche, wobei die Erfassungsvorrichtung einen Drucksensor (34, 54) umfasst und die Griffvorrichtung weiterhin umfasst:

ein Vorspannelement (36) zum Vorspannen der Triggeranordnung, um eine Vorspannkraft auf den Drucksensor auszuüben.

**12.** Selbstfahrende Arbeitsmaschine mit Heckantrieb nach einem der vorhergehenden Ansprüche, wobei die Verbindungsstangenanordnung außerdem eine zweite Verbindungsstange (322, 522) umfasst, die mit der Hauptmaschine verbunden ist, und die Griffvorrichtung außerdem ein Gehäuse (33, 53) umfasst, das die erste Verbindungsstange und die zweite Verbindungsstange verbindet, das Gehäuse mit einem ersten Aufnahmeraum (331, 531) versehen ist, und die erste Verbindungsstange in den ersten Aufnahmeraum hineinragt.

**13.** Selbstfahrende Arbeitsmaschine mit Heckantrieb nach Anspruch 12, wobei der Drucksensor außerhalb des Gehäuses angeordnet ist.

**14.** Selbstfahrende Arbeitsmaschine mit Heckantrieb nach einem der vorhergehenden Ansprüche, wobei das Betätigungselement mit einem Aufnahmeraum (314, 512b) ausgebildet ist, und der Drucksensor zumindest teilweise im Aufnahmeraum angeordnet ist.

**15.** Selbstfahrende Arbeitsmaschine mit Heckantrieb nach Anspruch 14, wobei der Drucksensor durch Schrauben fest mit dem Betätigungselement verbunden ist.

**Revendications**

**1.** Machine de travail autopropulsée à déplacement arrière, comprenant :

une machine principale (301) comprenant un ensemble de déplacement (304) et un moteur (305) destiné à entraîner l'ensemble de déplacement ; et
un dispositif de poignée (30, 50) relié à la machine principale,
dans laquelle le dispositif de poignée comprend :

un élément de commande (31, 51) comprenant une prise (311, 511) destinée à être tenue par un utilisateur ;
un ensemble de tige de raccordement (32, 52) comprenant une première tige de raccordement (321, 521) reliée à la machine de travail ;
un dispositif de détection (34a, 54a) destiné à détecter une poussée appliquée au dispositif de poignée pour l'entraînement de la machine de travail autopropulsée à déplacement arrière ; et
un ensemble de déclenchement (35, 55) capable d'appliquer une force au dispositif de détection lorsque la prise reçoit la poussée, **caractérisée en ce que**
l'ensemble de déclenchement est relié à l'ensemble de tige de raccordement, et le dispositif de détection est relié à l'élément de commande.

**2.** Machine de travail autopropulsée à déplacement arrière selon la revendication 1, dans laquelle le dispositif de détection comprend un capteur de pression (34, 54), et l'ensemble de déclenchement applique la force au capteur de pression pour amener le capteur de pression à se déformer lorsque la prise reçoit la poussée.

**3.** Machine de travail autopropulsée à déplacement arrière selon la revendication 2, dans laquelle le dispositif de poignée comprend en outre un boîtier (33, 53) formé avec une première cavité de logement (331, 351), la première tige de raccordement s'étend dans la première cavité de logement, l'élément de commande est formé avec une deuxième cavité de logement (314, 512b), et le capteur de pression est au moins partiellement disposé dans la deuxième cavité de logement.

**4.** Machine de travail autopropulsée à déplacement arrière selon l'une quelconque des revendications 2 et 3, dans laquelle l'élément de commande est disposé à l'extérieur du boîtier.

**5.** Machine de travail autopropulsée à déplacement arrière selon l'une quelconque des revendications 2 à 4, dans laquelle le capteur de pression est disposé à l'extérieur du boîtier.

**6.** Machine de travail autopropulsée à déplacement arrière selon l'une quelconque des revendications 2 à 5, dans laquelle l'ensemble de déclenchement comprend :

une pièce de déclenchement (351, 551) destinée à appliquer la force au capteur de pression ; et
un coulisseau (352, 552) relié à la première tige de raccordement ;

dans laquelle le dispositif de poignée comprend en outre une pièce de support (37, 57) destinée à supporter le coulisseau, le coulisseau est en contact avec la pièce de déclenchement, la pièce de support est reliée fixement à l'élément de commande, et le coulisseau pénètre à travers la pièce de support.

7. Machine de travail autopropulsée à déplacement arrière selon la revendication 6, dans laquelle, lorsque l'élément de commande reçoit la poussée, un déplacement relatif entre la pièce de support et le coulisseau peut être généré pour déformer le capteur de pression, dans laquelle une valeur maximale du déplacement relatif entre la pièce de support et le coulisseau est inférieure ou égale à 3 mm.

8. Machine de travail autopropulsée à déplacement arrière selon l'une quelconque des revendications 6 et 7, dans laquelle la pièce de support est disposée dans le boîtier.

9. Machine de travail autopropulsée à déplacement arrière selon l'une quelconque des revendications 6 à 8, dans laquelle la pièce de déclenchement comprend une partie sphérique en contact avec le capteur de pression.

10. Machine de travail autopropulsée à déplacement arrière selon la revendication 9, dans laquelle la pièce de déclenchement est une sphère.

11. Machine de travail autopropulsée à déplacement arrière selon l'une quelconque des revendications précédentes, dans laquelle le dispositif de détection comprend un capteur de pression (34, 54) et le dispositif de poignée comprend en outre :
un élément de précontrainte (36) destiné à solliciter l'ensemble de déclenchement afin d'appliquer une force de précontrainte au capteur de pression.

12. Machine de travail autopropulsée à déplacement arrière selon l'une quelconque des revendications précédentes, dans laquelle l'ensemble de tige de raccordement comprend en outre une deuxième tige de raccordement (322, 522) reliée à la machine principale, et le dispositif de poignée comprend en outre un boîtier (33, 53) reliant la première tige de raccordement et la deuxième tige de raccordement, le boîtier est formé avec une première cavité de logement (331, 531), et la première tige de raccordement s'étend dans la première cavité de logement.

13. Machine de travail autopropulsée à déplacement arrière selon la revendication 12, dans laquelle le capteur de pression est disposé à l'extérieur du boîtier.

14. Machine de travail autopropulsée à déplacement arrière selon l'une quelconque des revendications précédentes, dans laquelle l'élément de commande est formé avec une cavité de logement (314, 512b), et le capteur de pression est au moins partiellement disposé dans la cavité de logement.

15. Machine de travail autopropulsée à déplacement arrière selon la revendication 14, dans laquelle le capteur de pression est relié fixement à l'élément de commande par des vis.

FIG. 1

31

33

32

FIG. 2

FIG. 3

FIG. 4

FIG. 5

FIG. 6

FIG. 7

FIG. 8

FIG. 9

351

37

331

FIG. 10

FIG. 11

FIG. 12

FIG. 13

FIG. 14A

FIG. 14B

FIG. 14C

FIG. 15

FIG. 16

FIG. 17

512a

513a

57

53b

FIG. 18

FIG. 19

FIG. 20

FIG. 21

FIG. 22

FIG. 23

FIG. 24A

FIG. 24B

## FIG. 25

Pressure sensor — Pressure sensor 232

23

ADC chip 233a

233

233b

Single-chip microcomputer

24 Control unit

26 Driver circuit

25 M

FIG. 25

## FIG. 26

First pressure sensor — Second pressure sensor 232

23

First chip 233a Second chip

233

233b Single-chip microcomputer

24 Control unit

26 Driver circuit

25 M

FIG. 26

Id\*=0 →⊗→ PI → ud → Inverse Park transfor-mation → SVPWM → Inverter → $i_a$ $i_b$ $i_c$ → M

25

Sensing module → $i_q^*$ ⊗ → PI → uq

23

$i_d$ $i_q$ → Park transfor-mation ← Clark transfor-mation

θ Photoelectric encoder

FIG. 27

S101
Start to be powered on

S102
Collect thrust signals

S103
Process signals

S104
Control a drive motor to change output torque

FIG. 28

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021013251 A1